# EUROPEAN PATENT APPLICATION

(11) **EP 4 708 601 A1**
(43) Date of publication of application: **11.03.2026**
(21) Application number: 24814288.7
(22) Date of filing: 23.05.2024
(51) Int. Cl.: H02H 3/20, B60L 50/60

(54) **POWER SUPPLY APPARATUS, POWER SUPPLY SYSTEM AND POWER SUPPLY METHOD**

(30) Priority: 31.05.2023 CN 202310643705
(71) Applicant: Shenzhen Yinwang Intelligent Technologies Co., Ltd., Shenzhen, Guangdong 518110 (CN)
(72) Inventor: WANG, Quanwu, Shenzhen, Guangdong 518129 (CN); LV, Peike, Zhengzhou, Henan 450001 (CN); LIU, Zhang, Shenzhen, Guangdong 518129 (CN)
(74) Representative: Maiwald GmbH
(86) International application number: PCT/CN2024/094859
(87) International publication number: WO 2024/245089

(57) **Abstract**

Embodiments of this application provide a power supply apparatus, a power supply system, and a method. The power supply apparatus includes: a power supply bus, where the power supply bus is connected to an output end of a voltage conversion unit through a bidirectional isolation unit, and is connected to a low-voltage battery through another bidirectional isolation unit. The bidirectional isolation unit is configured to control connection and disconnection between the bus and the voltage conversion unit or the low-voltage battery. The bidirectional isolation unit includes two switches connected in series. The two switches connected in series each are connected in parallel to one diode, and the two diodes are disposed back to back. The power supply apparatus further includes another circuit, where the circuit is electrically connected to the bus, and is configured to supply power to a load. Solutions in embodiments of this application may be applied to new energy vehicles such as an electric vehicle and a hybrid electric vehicle, to improve functional safety performance of power supply of the vehicles.

## Description

This application claims priority to Chinese Patent Application No. 202310643705.4, filed with the China National Intellectual Property Administration on May 31, 2023 and entitled "POWER SUPPLY APPARATUS, POWER SUPPLY SYSTEM, AND METHOD", which is incorporated herein by reference in its entirety.

### TECHNICAL FIELD

Embodiments of this application relate to the field of power electronics technologies, and more specifically, to a power supply apparatus, a power supply system, and a method.

### BACKGROUND

Different from a power supply manner of a conventional fossil fuel vehicle, for a new energy vehicle like an electric vehicle or a hybrid electric vehicle, a high-voltage power battery (referred to as a high-voltage battery for short below) and a low-voltage battery are usually used to supply power to an autonomous driving device, an in-vehicle entertainment device, and low-voltage loads such as vehicle door locks and windscreen wipers. With the development of intelligence and electrification, a quantity of loads has increased significantly, leading to a higher likelihood of faults in a power supply system. In addition, an increase in an autonomous driving level of a vehicle imposes an ever-growing functional safety requirement for a power supply system of the vehicle.

In view of this, a solution capable of enhancing functional safety of power supply of the vehicle needs to be developed urgently.

### SUMMARY

Embodiments of this application provide a power supply apparatus, a power supply system, and a method, to improve functional safety performance of a power supply system of a vehicle.

According to a first aspect, a power supply apparatus is provided. The apparatus includes a first circuit, a second circuit, a first isolation unit, and a second isolation unit. A first end of the first isolation unit is electrically connected to the first circuit, a second end of the first isolation unit is configured to connect to a first output end of a voltage conversion unit, and the first isolation unit is configured to control connection and disconnection between the first circuit and the first output end of the voltage conversion unit. A second end of the second isolation unit is electrically connected to the first circuit, a second end of the second isolation unit is configured to connect to a first battery, and the second isolation unit is configured to control connection and disconnection between the first circuit and the first battery. The second circuit is electrically connected to the first circuit, and is configured to supply power to a first load. The first isolation unit and the second isolation unit are bidirectional isolation units, the bidirectional isolation unit includes a first switch, a second switch, a first diode, and a second diode, the first diode is connected in parallel to the first switch, the second diode is connected in parallel to the second switch, the first switch is connected in series to the second switch, and an anode of the first diode is connected to an anode of the second diode. The second circuit is connected to the first circuit, and is configured to supply power to the first load.

For example, the voltage conversion unit may be a direct current to direct current converter, and the power supply apparatus may include a power supply apparatus 140, 150, 160, 170, or a variation or an extension thereof. For another example, the power supply apparatus 140 is used as an example. The power supply apparatus 140 includes a circuit 1410, and the circuit 1410 may be separately connected to the direct current to direct current converter and a low-voltage battery 131 through an isolation unit 141 and an isolation unit 142. The power supply apparatus 140 may further include a circuit 1411, configured to supply power to a safety load 171, and/or include a circuit 1421, configured to supply power to a conventional load 181. In other words, for the power supply apparatus 140, the circuit 1410 may be understood as the first circuit, the circuit 1411 or the circuit 1421 may be understood as the second circuit, the isolation unit 141 may be understood as the first isolation unit, and the isolation unit 142 may be understood as the second isolation unit. For another example, for the power supply apparatus 160, a circuit 1610 may be understood as the first circuit of the power supply apparatus 160. The first load may be any load.

In an embodiment, the first circuit may be understood as a circuit that connects the first isolation unit and the second isolation unit, and there is a connection point between the first circuit and the second circuit that is configured to supply power to the first load.

Because the bidirectional isolation unit includes two switches connected in series, the two switches connected in series each are connected in parallel to one diode, and the two diodes are disposed back to back. In this application, the bidirectional isolation unit is separately disposed between a bus and two power source branches: the voltage conversion apparatus and the low-voltage battery, so that a connection between the bus and any power source branch can be completely disconnected, and impact of a fault like an overvoltage, an undervoltage, or a short circuit of any power source branch on a bus voltage can be avoided, ensuring stability of the bus voltage. The second circuit connected to the bus supplies power to the load, so that normal power supply to the load can be ensured when any power source branch is faulty, to improve functional safety performance of a power supply system.

With reference to the first aspect, in some implementations of the first aspect, the apparatus may further include: a first control unit, configured to: obtain first state information, where the first state information indicates a state of the first output end of the voltage conversion unit and/or a state of an output end of the first battery; and when the first state information indicates that the state of the first output end of the voltage conversion unit is abnormal, control the first isolation unit to be disconnected, and control the second isolation unit to be connected; or when the first state information indicates that an output of the first battery is abnormal, control the second isolation unit to be disconnected, and control the first isolation unit to be connected.

For example, an abnormal state of an output end of the voltage conversion unit may include an output overvoltage of the voltage conversion unit, an output undervoltage of the voltage conversion unit, or a short circuit of the voltage conversion unit; and an abnormal output of a battery may include a short circuit of the battery or an output undervoltage of the battery.

In this application, when a fault like a short circuit, an output overvoltage, or an output undervoltage occurs on the voltage conversion unit, the first isolation unit is controlled to be disconnected, to disconnect the voltage conversion unit from the bus, and the first battery is used to maintain a voltage of the bus, to ensure normal power supply to the load. When an exception like a short circuit or an output undervoltage occurs on the first battery, the second isolation unit is controlled to be disconnected, to disconnect the first battery from the bus, and the voltage conversion unit is used to maintain the voltage of the bus, to ensure normal power supply to the load. This can improve power supply redundancy performance of the power supply apparatus.

With reference to the first aspect, in some implementations of the first aspect, the apparatus may further include: a first management unit, configured to: when the first control unit runs abnormally, control the first isolation unit to be disconnected, and control the second isolation unit to be connected.

For example, for the power supply apparatus 140, a control unit 1 may be understood as the first control unit, and a management unit 1 may be understood as the first management unit. The management unit 1 may obtain a running state of the control unit 1, and when the control unit 1 runs abnormally, control the isolation unit 141 to be disconnected, and control the isolation unit 142 to be connected.

For another example, for the power supply apparatus 160, a control unit 2 may be understood as a first control unit included in the power supply apparatus 160, and a management unit 2 may be understood as a first management unit included in the power supply apparatus 160.

In this application, when the first control unit runs abnormally, the first isolation unit is controlled to be disconnected and the second isolation unit is controlled to be connected, so that the first battery is used to maintain the voltage of the bus. It may also be referred to as controlling the bus to be in a safe mode. By controlling the bus to operate in the safe mode, a bus voltage fluctuation caused by an abnormal operation of the control unit can be avoided, ensuring normal power supply to the load.

With reference to the first aspect, in some implementations of the first aspect, the first load is a safety load, and the first management unit may be further configured to: when the first control unit runs abnormally, and after it is determined that power supply to the first load is normal, control the first control unit to restart.

In this application, when it is determined that power supply to the safety load is normal, the first control unit is controlled in time to restart, so that time within which the power supply apparatus is in the safe mode can be shortened, to help reduce power consumption of the low-voltage battery.

With reference to the first aspect, in some implementations of the first aspect, the first management unit may be further configured to: supply power to the first control unit through a first port of the first management unit; and obtain an output state of the first port, and when an output of the first port is abnormal, control the first isolation unit to be disconnected, and control the second isolation unit to be connected.

In this application, when the first management unit supplies power to the first control unit, and when an output of the first management unit is abnormal, the power supply apparatus is controlled to be in the safe mode, so that an abnormal operation of the first control unit caused by the abnormal output of the first management unit can be avoided, and the bus voltage fluctuation caused by the abnormal operation of the control unit can be avoided, ensuring normal power supply to the load.

With reference to the first aspect, in some implementations of the first aspect, functional safety of the management unit meets an automotive safety integrity level (automotive safety integrity level, ASIL) B requirement, and/or functional safety of the first control unit meets the ASIL B requirement, and/or functional safety of the first isolation unit and functional safety of the second isolation unit meet the ASIL B requirement.

In this application, the first isolation unit and the second isolation unit meet the ASIL B requirement. For a fault like an undervoltage, an overvoltage, or a short circuit of the voltage conversion unit, or a short circuit or an undervoltage of the first battery, the power supply apparatus can meet an ASIL B level.

With reference to the first aspect, in some implementations of the first aspect, the first load may be the safety load, the safety load may include at least a first power supply interface and a second power supply interface, and the second circuit is connected to the first power supply interface of the first load; and the power supply apparatus may further include a third circuit, a fourth circuit, a third isolation unit, and a fourth isolation unit. A first end of the third isolation unit is electrically connected to the third circuit, a second end of the third isolation unit is configured to connect to a second output end of the voltage conversion unit, and the third isolation unit is configured to control connection and disconnection between the third circuit and the second output end of the voltage conversion unit. A first end of the fourth isolation unit is electrically connected to the third circuit, a second end of the fourth isolation unit is configured to connect to a second battery, the third isolation unit is configured to control connection and disconnection between the third circuit and the second battery, and the third isolation unit and the fourth isolation unit are the bidirectional isolation units. The fourth circuit is electrically connected to the third circuit, and is configured to supply power to the first load.

In an embodiment, the power supply apparatus may be the power supply apparatus 170 and an extension or a variation thereof. For example, for the power supply apparatus 170, the circuit 1410 may be understood as the first circuit, and the circuit 1610 may be understood as the third circuit. It is assumed that the first load is the safety load 171. Correspondingly, the circuit 1411 may be understood as the second circuit, and the circuit 1611 may be understood as the fourth circuit. The isolation units 141, 142, 161, and 162 in the power supply apparatus 170 may be respectively understood as the first isolation unit, the second isolation unit, the third isolation unit, and the fourth isolation unit.

In this application, the power supply apparatus includes two power supply buses: the first circuit and the third circuit. The two power supply buses may be used to separately provide two power supplies for the safety load, to meet a requirement of the safety load for two power supplies. Further, a bidirectional isolation unit is disposed between each of the two power supply buses and a corresponding power source branch, which can meet a high redundancy requirement for supplying power to the safety load, and can ensure normal power supply to the safety load.

With reference to the first aspect, in some implementations of the first aspect, the power supply apparatus may further include a fifth isolation unit. The second circuit is connected to a power supply interface of the first load through the fifth isolation unit, and the fifth isolation unit is configured to control connection and disconnection between the second circuit and the first load. The first control unit may be further configured to: when the first load is short-circuited, control the fifth isolation unit to be disconnected.

In this application, when a load is short-circuited, the fifth isolation unit is controlled to be disconnected, to disconnect the faulty load from the bus, so that a bus voltage drop caused by the short circuit of the faulty load can be avoided, and stability of the bus voltage can be ensured, to ensure normal power supply to another load.

With reference to the first aspect, in some implementations of the first aspect, the apparatus may further include: a second control unit, configured to: obtain second state information, where the second state information indicates a state of the second output end of the voltage conversion unit and/or a state of the second battery; and when the second state information indicates that an output of the second output end of the voltage conversion unit is abnormal, control the third isolation unit to be disconnected, and control the fourth isolation unit to be connected; or when the second state information indicates that an output of the second battery is abnormal, control the fourth isolation unit to be disconnected, and control the third isolation unit to be connected.

For example, for the power supply apparatus 170, a control unit 1 in a control module 145 may be understood as the first control unit, and a control unit 2 in a control module 165 may be understood as the second control unit. Correspondingly, the management unit 1 may be understood as the first management unit, and the management unit 2 may be understood as the second management unit.

In this application, when the output of the voltage conversion unit is abnormal, the third isolation unit is controlled to be disconnected, and the fourth isolation unit is controlled to be connected, so that a voltage of the third circuit (namely, the second power supply bus) is not affected by the abnormal output of the voltage conversion unit, to ensure that the second power supply bus normally supplies power to the load. When the second battery sends an exception like a short circuit or an output undervoltage, the fourth isolation unit is controlled to be disconnected and the third isolation unit is controlled to be connected, and the voltage conversion unit maintains the voltage of the second power supply bus, to ensure normal power supply to the load.

With reference to the first aspect, in some implementations of the first aspect, the apparatus may further include: a second management unit, configured to: when the second control unit runs abnormally, control the third isolation unit to be disconnected, and control the fourth isolation unit to be connected; and/or when the second control unit runs abnormally, and after it is determined that power supply to the safety load connected to the power supply apparatus is normal, control the second control unit to restart.

With reference to the first aspect, in some implementations of the first aspect, the first control unit and the second control unit are heterogeneous, and the first management unit and the second management unit are heterogeneous. For example, the first control unit and the second control unit have different models, architectures, and manufacturers.

In this application, the first control unit and the second control unit are heterogeneous, and the first management unit and the second management unit are heterogeneous, so that a common cause failure of the first control unit and the second control unit can be avoided, and a common cause failure of the first management unit and the second management unit can be avoided.

With reference to the first aspect, in some implementations of the first aspect, functional safety of the second control unit and the second management unit meets the ASIL B requirement.

In some possible implementations, the power supply apparatus 170 may alternatively include only the control module 145. For example, functional safety of the control unit 1 in the control module 145 may meet an ASIL D level, so that functional safety of control on the isolation unit can reach the ASIL D level.

In this application, the first control unit and the second control unit separately control an isolation unit corresponding to a bus. When the first control unit and the second control unit meet the ASIL B requirement, functional safety of control on the isolation unit can reach the ASIL D level. The first management unit and the second management unit respectively manage the first control unit and the second control unit. When the first management unit and the second management unit meet the ASIL B requirement, functional safety performance of management of the control unit can reach the ASIL D level. Therefore, a chip and a processor with a low functional safety level can be used to implement high functional safety performance. In one aspect, costs can be reduced, and in the other aspect, a development and verification cycle can be shortened.

With reference to the first aspect, in some implementations of the first aspect, an overcurrent protection threshold of the first isolation unit may be less than an overcurrent protection threshold of the second isolation unit.

Optionally, an overcurrent protection threshold of the third isolation unit may be less than an overcurrent protection threshold of the fourth isolation unit.

When the isolation unit is disconnected due to a short circuit in the power supply system, because the overcurrent protection threshold of the first isolation unit is less than the overcurrent protection threshold of the second isolation unit, the first isolation unit is disconnected before the second isolation unit, and the power supply apparatus may operate in the safe mode, to improve power supply redundancy performance of the power supply system.

According to a second aspect, a power supply system is provided, where the system includes a first power supply unit and a first battery. The first power supply unit includes a first circuit, a second circuit, a first isolation unit, and a second isolation unit. For the first isolation unit, the second isolation unit, the first circuit, and the second circuit, refer to the descriptions in the first aspect.

For example, the first power supply unit may include a power supply apparatus 140 or 160. For another example, for a power supply system using a power supply apparatus 170, the first power supply unit may include a part (for example, a circuit 1410, isolation units 141 and 142, and a power supply circuit 1411 and/or a circuit 1421 corresponding to a load) that is in the power supply apparatus 170 and that corresponds to a first power supply subsystem; or the first power supply unit may include a part (for example, a circuit 1610, isolation units 161 and 162, and a power supply circuit 1611 and/or a circuit 1621 corresponding to a load) that is in the power supply apparatus 170 and that corresponds to a second power supply subsystem.

With reference to the second aspect, in some implementations of the second aspect, the power supply system may further include a second power supply unit and a second battery. The second power supply unit includes a fifth circuit, a sixth circuit, a sixth isolation unit, and a seventh isolation unit. A first end of the sixth isolation unit is electrically connected to the fifth circuit, a second end of the sixth isolation unit is configured to connect to a second output end of a voltage conversion unit, and the sixth isolation unit is configured to control connection and disconnection between the fifth circuit and the second output end of the voltage conversion unit. A first end of the seventh isolation unit is electrically connected to the fifth circuit, a second end of the seventh isolation unit is electrically connected to the second battery, the seventh isolation unit is configured to control connection and disconnection between the fifth circuit and the second battery, and the sixth isolation unit and the seventh isolation unit are bidirectional isolation units. The sixth circuit is electrically connected to the fifth circuit, and may be configured to supply power to a first load.

For example, the first load is a safety load, and the first circuit and the fifth circuit may be understood as two power supply buses of the power supply system. For example, the power supply system may be a power supply system 300 and a variation or an extension thereof. For another example, when the first power supply unit is the power supply apparatus 140, the second power supply unit may be the power supply apparatus 160. For another example, when the first power supply unit is a part corresponding to the first power supply subsystem in the power supply device 170, the second power supply unit may be a part corresponding to the second power supply subsystem in the power supply device 170.

In an embodiment, it is assumed that the first load is a safety load 171, the isolation units 141, 142, 161, and 162 may respectively correspond to the first isolation unit, the second isolation unit, the sixth isolation unit, and the seventh isolation unit, the circuit 1410 and the circuit 1610 may be respectively understood as the first circuit and the fifth circuit, and the circuit 1411 and the circuit 1611 may be respectively understood as the second circuit and the sixth circuit.

In this application, the two power supply buses may be used to separately provide two power supplies for the safety load, to meet a requirement of the safety load for two power supplies. Further, a bidirectional isolation unit is disposed between each of the two power supply buses and a corresponding power source branch, which can meet a high redundancy requirement for supplying power to the safety load, and can ensure normal power supply to the safety load.

With reference to the second aspect, in some implementations of the second aspect, the first power supply unit may further include: a first control unit, configured to: obtain first state information, where the first state information may indicate a state of a first output end of the voltage conversion unit and/or a state of an output end of the first battery; and when the first state information indicates that the state of the first output end of the voltage conversion unit is abnormal, control the first isolation unit to be disconnected, and control the second isolation unit to be connected; or when the first state information indicates that an output of the first battery is abnormal, control the second isolation unit to be disconnected, and control the first isolation unit to be connected.

With reference to the second aspect, in some implementations of the second aspect, the first power supply unit may further include: a first management unit, configured to: when the first control unit runs abnormally, control the first isolation unit to be disconnected, and control the second isolation unit to be connected; and/or when the first control unit runs abnormally, and after it is determined that power supply to the first load is normal, control the first control unit to restart.

With reference to the second aspect, in some implementations of the second aspect, the first management unit may be further configured to: supply power to the first control unit through a first port; obtain an output state of the first port, and when an output of the first port is abnormal, control the first isolation unit to be disconnected, and control the second isolation unit to be connected.

With reference to the second aspect, in some implementations of the second aspect, the second circuit is connected to a first power supply interface of the first load through a fifth isolation unit, and the fifth isolation unit may be configured to control connection and disconnection between the second circuit and the first load. The first control unit may be further configured to: when the first load is short-circuited, control the fifth isolation unit to be disconnected.

With reference to the second aspect, in some implementations of the second aspect, the second power supply unit may further include: a third control unit, configured to: obtain third state information, where the third state information indicates a state of the second output end of the voltage conversion unit and/or a state of an output end of the second battery; and when the third state information indicates that an output of the second output end of the voltage conversion unit is abnormal, control the sixth isolation unit to be disconnected, and control the seventh isolation unit to be connected; or when the third state information indicates that an output of the second battery is abnormal, control the seventh isolation unit to be disconnected, and control the sixth isolation unit to be connected.

With reference to the second aspect, in some implementations of the second aspect, the second power supply unit may further include: a third management unit, configured to: when the third control unit runs abnormally, control the sixth isolation unit to be disconnected, and control the seventh isolation unit to be connected; and/or when the third control unit runs abnormally, and after it is determined that power supply to the first load is normal, control the third control unit to restart.

With reference to the second aspect, in some implementations of the second aspect, the third management unit may be further configured to: supply power to the second control unit through a third port; obtain an output state of the third port; and when an output of the third port is abnormal, control the sixth isolation unit to be disconnected, and control the seventh isolation unit to be connected.

With reference to the second aspect, in some implementations of the second aspect, the sixth circuit is connected to a second power supply interface of the first load through an eighth isolation unit, and the eighth isolation unit is configured to control connection and disconnection between the sixth circuit and the first load. The third control unit may be further configured to: when the first load is short-circuited, control the eighth isolation unit to be disconnected.

For example, when a branch in which the second power supply interface of the first load is located is short-circuited, the eighth isolation unit may be controlled to be disconnected. In this case, if a branch in which the first power supply interface of the first load is located operates normally, the fifth isolation unit may be controlled to be connected.

In an embodiment, the power supply system 300 is used as an example, the first power supply unit may be the power supply apparatus 140, and the second power supply unit may be the power supply apparatus 160. A control unit 1 and a control unit 2 may be respectively understood as the first control unit and the third control unit, and a management unit 1 and a management unit 2 may be respectively understood as the first management unit and the third management unit. It is assumed that the first load is the safety load 171, and isolation units 1431 and 1631 may be respectively understood as the fifth isolation unit and the eighth isolation unit.

With reference to the second aspect, in some implementations of the second aspect, the first management unit and the third management unit are heterogeneous, and/or the first control unit and the third control unit are heterogeneous.

With reference to the second aspect, in some implementations of the second aspect, functional safety of the third control unit and the third management unit meets an ASIL B requirement; and/or functional safety of the first control unit and the first management unit meets the ASIL B requirement; and/or functional safety of the first isolation unit and the second isolation unit meets the ASIL B requirement; and/or functional safety of the sixth isolation unit and the seventh isolation unit meets the ASIL B requirement.

With reference to the second aspect, in some implementations of the second aspect, an overcurrent protection threshold of the first isolation unit is less than an overcurrent protection threshold of the second isolation unit, and/or an overcurrent protection threshold of the sixth isolation unit is less than an overcurrent protection threshold of the seventh isolation unit.

With reference to the second aspect, in some implementations of the second aspect, the first power supply apparatus may further include a seventh circuit and a ninth isolation unit. The seventh circuit is electrically connected to the first circuit, and is configured to connect to the second load through the ninth isolation unit, and the ninth isolation unit may be configured to control connection and disconnection between the seventh circuit and the second load. The first control unit may be further configured to: when the second load is short-circuited, control the ninth isolation unit to be disconnected.

For example, when the ninth isolation unit is connected, the first power supply apparatus may supply power to the second load through the seventh circuit.

With reference to the second aspect, in some implementations of the second aspect, a second power supply apparatus may further include an eighth circuit. The eighth circuit is electrically connected to the fifth circuit, and is configured to connect to a third load through a tenth isolation unit. The tenth isolation unit may be configured to control connection and disconnection between the eighth circuit and the third load. The second control unit may be further configured to: when the third load is short-circuited, control the tenth isolation unit to be disconnected.

For example, when the tenth isolation unit is connected, the second power supply apparatus may supply power to the third load through the eighth circuit.

In an embodiment, the second load and the third load may be two power supply interfaces of a same safety load. For example, the power supply system 300 is used as an example, it is assumed that the second load and the third load are two power supply interfaces of a safety load 17n (where n is a positive integer), isolation units 143n and 163n may be respectively understood as the ninth isolation unit and the tenth isolation unit.

In another embodiment, the second load or the third load may be a conventional load.

According to a third aspect, a method is provided, and may be applied to a first power supply unit. The first power supply unit includes a first circuit, a second circuit, a first isolation unit, and a second isolation unit. A first end of the first isolation unit is electrically connected to the first circuit, a second end of the first isolation unit is configured to connect to a first output end of a voltage conversion unit, and the first isolation unit is configured to control connection and disconnection between the first circuit and the first output end of the voltage conversion unit. A first end of the second isolation unit is electrically connected to the first circuit, a second end of the second isolation unit is configured to connect to a first battery, and the second isolation unit is configured to control connection and disconnection between the first circuit and the first battery. The second circuit is electrically connected to the first circuit, and is configured to supply power to a first load. The first isolation unit and the second isolation unit are bidirectional isolation units. The method includes: when a first fault is detected, controlling at least one of the voltage conversion unit and the first battery to supply power to the first load.

For example, the method may be performed by control units 1 and 2, or may be performed by control modules 145 and 165, or may be performed by power supply apparatuses 140 and 160 provided with the control modules, or may be performed by a power supply system 300, or may be performed by a vehicle provided with a power supply apparatus or a power supply system.

With reference to the third aspect, in some implementations of the third aspect, the first fault includes at least one of the following: An output of the voltage conversion unit is greater than or equal to a first threshold, the output of the voltage conversion unit is less than or equal to a second threshold, and the voltage conversion unit is short-circuited; and controlling at least one of the voltage conversion unit and the first battery to supply power to the first load includes: controlling the first isolation unit to be disconnected, controlling the second isolation unit to be connected, and supplying power to the first load through the first battery.

With reference to the third aspect, in some implementations of the third aspect, the first fault includes at least one of the following: An output of the first battery is less than or equal to a third threshold, and the first battery is short-circuited; and controlling at least one of the voltage conversion unit and the first battery to supply power to the first load includes: controlling the second isolation unit to be disconnected, controlling the first isolation unit to be connected, and supplying power to the first load through the voltage conversion unit.

According to a fourth aspect, a method is provided. The method may be applied to a power supply system, and the power supply system includes a first power supply unit, a second power supply unit, a first battery, and a second battery. The method includes: when it is detected that a second fault occurs, controlling at least two of a voltage conversion unit, the first battery, and the second battery to supply power to a first load.

For example, the method may be performed by control units 1 and 2, or may be performed by control modules 145 and 165, or may be performed by power supply apparatuses 140 and 160 provided with the control modules, or may be performed by a power supply system 300, or may be performed by a vehicle provided with a power supply apparatus or a power supply system. For the first power supply unit and the second power supply unit, refer to the descriptions in the second aspect.

With reference to the fourth aspect, in some implementations of the fourth aspect, the second fault includes: An output of the voltage conversion unit is greater than or equal to a first threshold, an output of the voltage conversion unit is less than or equal to a second threshold, or the voltage conversion unit is short-circuited; and controlling at least two of the voltage conversion unit, the first battery, and the second battery to supply power to the first load may include: controlling a first isolation unit and a sixth isolation unit to be disconnected, controlling a second isolation unit and a seventh isolation unit to be connected, and supplying power to the first load through the first battery and the second battery.

With reference to the fourth aspect, in some implementations of the fourth aspect, the second fault includes: An output of the first battery is less than or equal to a third threshold or the first battery is short-circuited; and controlling at least two of the voltage conversion unit, the first battery, and the second battery to supply power to the first load may include: controlling a second isolation unit to be disconnected, controlling the first isolation unit, the sixth isolation unit, and the seventh isolation unit to be connected, and supplying power to the first load through the voltage conversion unit and the second battery.

In an embodiment, the control module 145 may directly control on and off of isolation units 141 and 142, and may communicate with the control module 165 through a communication circuit, to control isolation units 161 and 162.

With reference to the fourth aspect, in some implementations of the fourth aspect, the method may further include: obtaining battery state information of the first battery and the second battery; and controlling state of charge balance between the first battery and the second battery based on the battery state information.

With reference to the fourth aspect, in some implementations of the fourth aspect, controlling state of charge balance between the first battery and the second battery includes: when a state of charge difference between the first battery and the second battery is greater than or equal to a fourth threshold, controlling the seventh isolation unit to be disconnected, and controlling the first isolation unit, the second isolation unit, and the sixth isolation unit to be connected.

According to a fifth aspect, a vehicle is provided, where the vehicle includes a high-voltage battery and a voltage conversion unit. The high-voltage battery is electrically connected to an input end of the voltage conversion unit. The vehicle further includes the power supply apparatus according to any possible implementation of the first aspect, and the first isolation unit of the power supply apparatus is electrically connected to the first output end of the voltage conversion unit; or the vehicle further includes the power supply system according to any possible implementation of the second aspect, and the first isolation unit of the power supply system is electrically connected to the first output end of the voltage conversion unit.

According to a sixth aspect, a computer program product is provided. The computer program product includes computer program code. When the computer program code is run on a computer, the computer is caused to perform the method according to any possible implementation of the third aspect or the fourth aspect.

According to a seventh aspect, a computer-readable medium is provided. The computer-readable medium stores instructions. When the instructions are executed by a processor, the processor is caused to implement the method according to any possible implementation of the third aspect or the fourth aspect.

According to an eighth aspect, a chip is provided. The chip includes a circuit, and the circuit is configured to perform the method according to any possible implementation of the third aspect or the fourth aspect.

### BRIEF DESCRIPTION OF DRAWINGS

FIG. 1 is a diagram of a power supply system according to an embodiment of this application;
FIG. 2 is a diagram of a power supply subsystem according to an embodiment of this application;
FIG. 3 is a diagram of a bidirectional isolation unit according to an embodiment of this application;
FIG. 4 is a diagram of another power supply subsystem according to an embodiment of this application;
FIG. 5 is a diagram of a power supply system according to an embodiment of this application;
FIG. 6 is a diagram of another power supply system according to an embodiment of this application;
FIG. 7 is a schematic block diagram of a power supply apparatus according to an embodiment of this application;
FIG. 8 is a diagram of a structure of another power supply subsystem according to an embodiment of this application;
FIG. 9 is a schematic flowchart of a power supply method according to an embodiment of this application; and
FIG. 10 is a schematic flowchart of another power supply method according to an embodiment of this application.

### DESCRIPTION OF EMBODIMENTS

The following describes technical solutions of embodiments in this application with reference to the accompanying drawings.

In descriptions of embodiments of this application, "/" means "or" unless otherwise specified. For example, A/B may represent A or B. In this specification, "and/or" describes an association relationship between associated objects and represents that three relationships may exist. For example, A and/or B may represent the following three cases: Only A exists, both A and B exist, and only B exists. In this application, "at least one" means one or more, and "a plurality of' means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In embodiments of this application, prefix words such as "first" and "second" are used only to distinguish different described objects, and do not limit locations, a sequence, priorities, quantities, content, or the like of the described objects. In embodiments of this application, use of a prefix word, for example, an ordinal number, used to distinguish between described objects does not constitute a limitation on the described objects. For descriptions of the described objects, refer to descriptions of context in the claims or embodiments. The use of such a prefix word should not constitute a redundant limitation.

A power supply system provided in this application is applicable to a transportation means that needs to be driven by an electric driver. The transportation means may include a land transportation tool, a water transportation tool, an air transportation tool, an industrial device, an agricultural device, an entertainment device, or the like. For example, the transportation means may be a vehicle. The vehicle is a vehicle in a broad sense, and may be a transportation tool (like a commercial vehicle, a passenger vehicle, a motorcycle, a flight vehicle, or a train), an industrial vehicle (like a forklift, a trailer, or a tractor), an engineering vehicle (like an excavator, a bulldozer, or a crane), an agricultural device (like a lawn mower or a harvester), an amusement device, a toy vehicle, or the like. A type of the vehicle is not specifically limited in embodiments of this application. For another example, the transportation means may be a transportation tool like an aircraft or a ship. For example, the vehicle in this application may include a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), a new energy vehicle (new energy vehicle, NEV), or the like.

With development of intelligent driving technologies, for a vehicle, an original pure manual driving mode also develops to an autonomous driving mode. Current and future vehicles may have one or more of autonomous driving levels L0 to L5. The autonomous driving levels (L0 to L5) are defined according to a standard of the society of automotive engineers (society of automotive engineers, SAE). L0 indicates no automation, L1 indicates driving support, L2 indicates partial automation, L3 indicates conditional automation, L4 indicates high automation, and L5 indicates full automation. Tasks of monitoring and responding to road conditions at the levels L1 to L3 are jointly completed by a driver and a system, and the driver needs to take over a dynamic driving task. The levels L4 and L5 enable the driver to be completely transformed into a passenger.

To meet requirements of autonomous driving, systems of the vehicle are more and more complex, and risks from system failures and random hardware failures are increasing. To cope with the risks, it needs to pay attention to behavior of each system and each hardware of the vehicle after a fault occurs, to avoid an unacceptable risk caused by a functional safety fault of the vehicle, and this is functional safety. Functional safety levels of a system or hardware in the current and future vehicles may include quality management (quality management, QM) and one or more of ASIL A to ASIL D. The functional safety levels are defined according to a standard of the society of automotive engineers (society of automotive engineers, SAE). The functional safety level QM may be understood as irrelevant to functional safety.

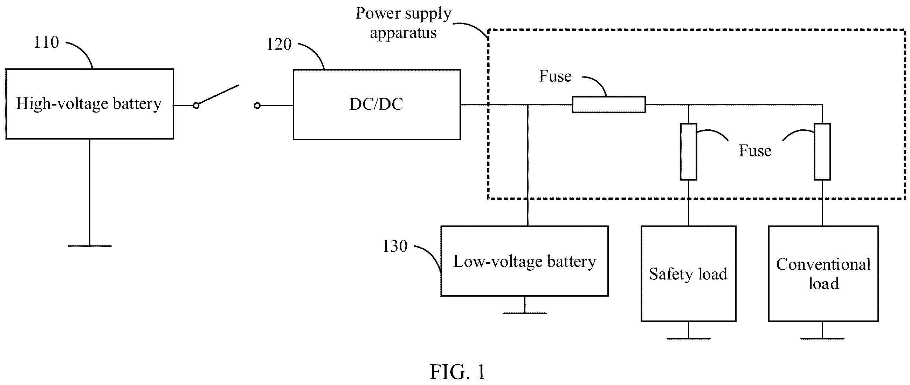

FIG. 1 shows a power supply system. As shown in FIG. 1, in a conventional solution, a load is directly connected to a direct current to direct current converter (direct current to direct current converter, DC/DC) circuit 120 and a low-voltage battery in the system. The DC/DC circuit may convert a high direct current voltage of a high-voltage battery 110 to a low direct current voltage for use by the load or for charging the low-voltage battery 130. A fuse is disposed between the load and a power source (including the low-voltage battery and the DC/DC circuit). When any branch is short-circuited, the fuse is blown. Loads may be classified into a conventional load and a safety load based on a functional safety requirement. The conventional load may be understood as a load having no functional safety requirement, and the safety load may be understood as a load having the functional safety requirement.

In an embodiment, an electric vehicle or a hybrid electric vehicle is used as an example. As shown in FIG. 1, the low-voltage battery may include a 12 volt (volt, V) storage battery of a vehicle, the high-voltage battery may include a power battery, the conventional load may include a QM-level load like a loudspeaker and a sound box of the vehicle, and the safety load may include a power-consuming device that has a requirement on a functional safety level, for example, an electronic stability program (electronic stability program, ESP) system, an electronic parking brake (electronic parking brake, EPB) system, or an electronic power steering (electronic power steering, EPS) control unit. A power supply apparatus including the fuse in FIG. 1 may include a power distribution box of the vehicle.

A conventional manner has the following problems: (1) Because the DC/DC circuit is directly connected in parallel to the low-voltage battery, an unexpected overvoltage or undervoltage of the DC/DC directly affects running of the safety load and a charging process of the low-voltage battery. (2) The safety load and the conventional load are connected in parallel in a power supply loop through fuses. For any safety load, although a fuse corresponding to a faulty branch is blown when the branch in which another load is located is short-circuited, a slow fuse blowing speed causes a voltage drop of the power supply system, to affect running of the safety load. For example, for an autonomous driving controller, the voltage drop of the power supply system causes the autonomous driving controller to restart. Considering that a restart process of the autonomous driving controller usually takes more than 10 seconds, in a high-level autonomous driving scenario, an accident that seriously threatens the vehicle and personal safety may be caused in a restart time period. In addition, the fuse is a vulnerable component, and the fuse blowing process is random and cannot be detected, which also affects power supply safety of the safety load. Due to the foregoing problems, the power supply system in the current technical background cannot meet requirements of L3 and above autonomous driving on low-voltage power supply functional safety. To meet the functional safety requirements, a power source system for L3 and above autonomous driving needs to have a redundancy design to avoid unexpected risks caused by single-point failures.

In view of this, embodiments of this application provide a power supply apparatus, a power supply system, and a method.

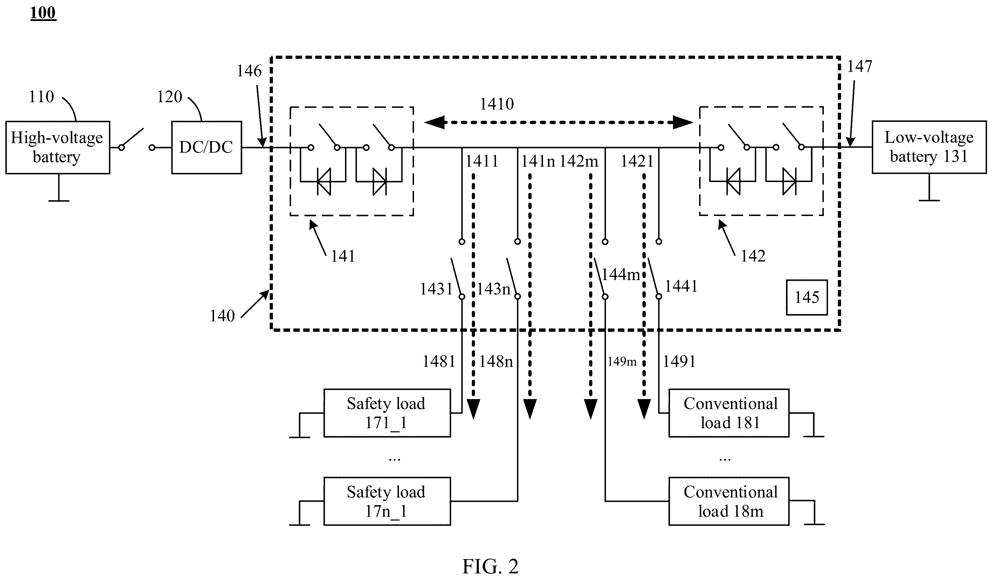

The following describes technical solutions of embodiments in this application with reference to FIG. 2 to FIG. 7.

For example, FIG. 2 is a diagram of a power supply subsystem according to an embodiment of this application. A power supply subsystem 100 shown in FIG. 2 may include a high-voltage battery 110, a DC/DC circuit 120, a low-voltage battery 131, a power supply apparatus 140, one or more safety loads, and/or one or more conventional loads.

In an embodiment, the low-voltage battery 131 may be the same as or different from and the low-voltage battery 130.

For example, the power supply apparatus 140 may include an interface 146 configured to connect to a high-voltage battery side, may include an interface 147 configured to connect to a low-voltage battery side, and may include a power supply interface configured to connect to a load side.

In an embodiment, as shown in FIG. 2, the power supply apparatus 140 may be connected to the DC/DC circuit 120 through the interface 146, to be connected to the high-voltage battery 110. The power supply apparatus 140 may be connected to the low-voltage battery 131 through the interface 147.

In another embodiment, the power supply subsystem 100 may include conventional loads 181 to 18m (where m is a positive integer). The power supply apparatus 140 may be separately connected to the conventional loads 181 to 18m through conventional load power supply interfaces 1491 to 149m, to supply power to the conventional loads.

In another embodiment, the power supply subsystem 100 may include safety loads 171 to 17n (where n is a positive integer). The power supply apparatus 140 may separately supply power to the one or more safety loads through safety load power supply interfaces 1481 to 148n.

For example, the safety load may include at least two power supply interfaces. For example, the safety load 17n may include at least power supply interfaces 17n_1 and 17n_2, and the two interfaces may be respectively referred to as a safety load 17n_1 and a safety load 17n_2 for short. The power supply apparatus 140 may be connected to any power supply interface of the safety load 17n, to supply power to the safety load. In other words, the safety load 17n supports at least two power supplies, and interfaces for the two power supplies are respectively the power supply interfaces 17n_1 and 17n_2. For another example, the safety load 171 may be a vehicle control unit (vehicle control unit, VCU), and the VCU may support two power supplies. To meet a functional safety requirement, in the power supply subsystem 100, the power supply apparatus 140 may be connected to one power supply interface (for example, a power supply interface 171_1) of the VCU through the interface 1481, and another power supply subsystem may supply power to the other power supply interface (for example, a power supply interface 171_2) of the VCU. In this way, the two power supply subsystems provide the two power supplies for the VCU. For another example, the safety load may alternatively include an autonomous driving domain controller, and the autonomous driving domain controller may include two power supplies. The safety load power supply interface of the power supply apparatus 140 may be connected to one power supply interface of the autonomous driving domain controller, to supply power to the autonomous driving domain controller. For another example, the power supply apparatus 140 may be separately connected to safety loads 171_1 to 17n_1 through the safety load power supply interfaces 1481 to 148n, to supply power to the safety loads. For another example, in some possible implementations, the safety loads may also include an EPS, an ESC, and the like.

In another embodiment, only for the power supply apparatus 140, a plurality of power supply interfaces provided by the power supply apparatus 140 may be the same or similar. For example, for the power supply apparatus 140, the power supply interface 1481 and the power supply interface 1491 may be a same interface, or parameters of the power supply interface 1481 and the power supply interface 1491 may be the same. Further, when the power supply apparatus 140 needs to be used in the power supply system, the plurality of interfaces may be set based on loads used in an actual situation, so that the plurality of interfaces can match corresponding loads. After the matching, the parameters of the power supply interface 1481 and the power supply interface 1491 may be different.

In another embodiment, a preset part of the plurality of power supply interfaces included in the power supply apparatus 140 may be safety load power supply interfaces such as the safety load power supply interfaces 1481 to 148n, and the other part thereof may be conventional load power supply interfaces such as the conventional load power supply interfaces 1491 to 149m.

It should be understood that components in FIG. 2 that have the same or similar functions as those in FIG. 1 use the same reference numerals as those in FIG. 1. For specific functions, refer to the foregoing descriptions.

For example, the power supply apparatus 140 includes a first circuit 1410, an isolation unit 141, and an isolation unit 142. The isolation unit 141 is disposed between a first circuit 1412 and the interface 146, and may be configured to control connection and disconnection between the first circuit 1410 and the DC/DC circuit. The isolation unit 142 is disposed between the first circuit 1412 and the interface 147, and may be configured to control connection and disconnection between the first circuit 1410 and the low-voltage battery 131. The isolation unit 141 and the isolation unit 142 may be bidirectional isolation units.

In some possible implementations, functional safety levels of the isolation unit 141 and the isolation unit 142 may be ASIL B.

In some possible implementations, an overcurrent protection threshold of the isolation unit 141 is less than an overcurrent protection threshold of the isolation unit 142.

In this embodiment of this application, the overcurrent protection threshold of the isolation unit 141 is less than that of the isolation unit 142. When a high-voltage battery side in which the DC/DC circuit is located is short-circuited, the isolation unit 141 may be first disconnected, and the isolation unit 142 may remain in an on state, and the low-voltage battery 131 may supply power to a load, to ensure normal power supply of the power supply system. As power supply time of the low-voltage battery increases, a power supply voltage of the low-voltage battery may decrease. In the foregoing manner, in a normal power supply process, the low-voltage battery may be used as few as possible to supply power to the load. Therefore, when an overcurrent fault occurs in the DC/DC circuit, a power supply fault caused by undervoltage of the low-voltage battery can be reduced, and a charge/discharge count of the low-voltage battery can be reduced, to help prolong a service life of the low-voltage battery.

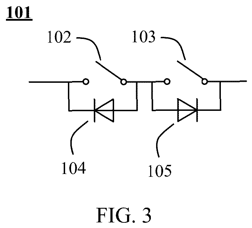

For example, FIG. 3 is a diagram of a bidirectional isolation unit according to an embodiment of this application. As shown in FIG. 3, the bidirectional isolation unit 101 may include a first switch 102, a second switch 103, a first diode 104, and a second diode 105. The first switch 102 is connected in series to the second switch 103, the first diode 104 and the second diode 105 are respectively connected in parallel to the first switch 102 and the second switch 103, and the first diode 104 and the second diode 105 are disposed back to back.

In some possible implementations, an electronic device formed by connecting the first switch 102 and the first diode 104 in parallel, and/or an electronic device formed by connecting the second switch 102 and the second diode 105 in parallel may include a metal-oxide-semiconductor field-effect transistor (metal-oxide-semiconductor field-effect transistor, MOSFET), an insulated gate bipolar transistor, or a bipolar junction transistor. For example, the bidirectional isolation unit 101 may include two MOSFETs (MOS transistors for short) that are disposed back to back and connected in series.

It is assumed that the isolation units 141 and 142 are not disposed as the bidirectional isolation units. For example, the isolation unit 141 is used as an example, the isolation unit 141 may use only a single MOS transistor or a single bipolar junction transistor. To be specific, it is assumed that the isolation unit 141 uses only one switch connected in parallel to a diode, and this manner causes the following problems: (1) If the isolation unit 141 includes only the switch 102 and the diode 104 connected in parallel, when the switch 102 is off, and if the DC/DC circuit is short-circuited, a current in the circuit 1410 may still flow to a side of the DC/DC circuit via the diode 104, resulting in a voltage drop of a bus voltage. (2) If the isolation unit 141 includes only the switch 103 and the diode 105 connected in parallel, when the switch 103 is off, and if an overvoltage occurs in the DC/DC circuit, a voltage on the circuit 1410 may still be affected via the diode 105, resulting in impact on operation of the safety load. That is, if the isolation unit 141 is not disposed as the bidirectional isolation unit, and when the isolation unit 141 is in a disconnected state, the DC/DC circuit and the circuit 1410 cannot be completely isolated. Similarly, if the isolation unit 142 is not disposed as the bidirectional isolation unit, and when the isolation unit 142 is in a disconnected state, the low-voltage battery 131 and the circuit 1410 cannot be completely isolated.

When the bidirectional isolation unit 101 is in a disconnected state, the switches 102 and 103 are both in an off state. In comparison with a solution in which only one switch connected in parallel to the diode is used, and a single MOS transistor, a single bipolar junction transistor, or the like is used, the isolation unit 141 is disposed as the bidirectional isolation unit, and when the isolation unit 141 is disconnected, the isolation unit 141 can completely disconnect the DC/DC circuit from the circuit 1410, so that a fault of the DC/DC circuit cannot affect a voltage and a current of a bus. Similarly, the isolation unit 142 is disposed as the bidirectional isolation unit, and when the isolation unit 142 is disconnected, the isolation unit 142 can completely isolate the impact of the low-voltage battery on the voltage and the current of the circuit 1410.

The power supply apparatus 140 may further include a second circuit, configured to supply power to the load. The second circuit may be connected to the first circuit and the power supply interface of the power supply apparatus 140. An isolation unit may be disposed between the second circuit and the power supply interface, and the isolation unit may be configured to control connection and disconnection between the first circuit 1410 and the load.

It should be noted that the "interface" in this application is mainly a port connected to a device (such as a power source or a load) through a conducting wire (or an electrical wire). For example, the power supply interface of the power supply apparatus 140 may be understood as a port that is provided by the power supply apparatus and that is configured to supply power to a power-consuming device, for example, the interface 1481. A power supply interface of the load may be understood as a port that is provided by the load and that is configured to connect to the power supply apparatus. The port on a power supply apparatus side is connected to the port on a load side through a conducting wire, so that the power supply apparatus 140 can supply power to the load.

In an embodiment, as shown in FIG. 2, any one of the circuit 1411 to the circuit 141n may be understood as the second circuit. The safety load power supply interface 148n is used as an example, and when a corresponding isolation unit 143n is connected, the load 17n_1 may be connected to the first circuit 1410 through the second circuit 141n, so that the power supply subsystem 100 may supply power to the load via the first circuit 1410 and the second circuit 141n and through the interface 148n. When the isolation unit 143n is disconnected, the first circuit 1410 is disconnected from the load 17n_1.

In another embodiment, any one of a circuit 1421 to a circuit 142m may be understood as the second circuit. The conventional load power supply circuit 149m is used as an example, and when a corresponding isolation unit 144m is connected, the load 18m may be connected to the first circuit 1410 through the second circuit 142m, so that the power supply subsystem 100 may supply power to the load.

In another embodiment, the safety load 17n_1 is used as an example. When both the isolation unit 141 and the isolation unit 142 are connected, the high-voltage battery and the low-voltage battery may maintain the bus voltage, to supply power to the load. When the isolation unit 141 is connected and the isolation unit 142 is disconnected, the high-voltage battery supplies power to the load. When the isolation unit 142 is connected and the isolation unit 141 is disconnected, the low-voltage battery supplies power to the load.

For example, the power supply apparatus 140 may include a control module 145, and the control module 145 may control connection and disconnection of the plurality of isolation units. For example, the control module 145 may be an intelligent distribution unit (intelligent distribution unit, IDU).

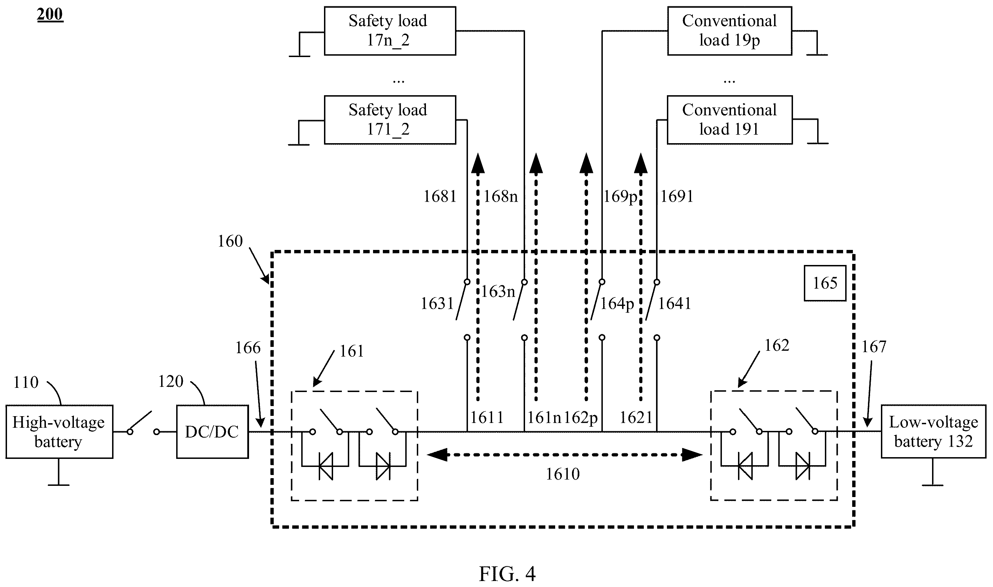

For example, FIG. 4 is a diagram of another power supply subsystem according to an embodiment of this application. The power supply subsystem 200 shown in FIG. 4 may include a high-voltage battery 110, a DC/DC circuit 120, a low-voltage battery 132, a power supply apparatus 160, one or more safety loads, and/or one or more conventional loads.

For example, the power supply apparatus 160 may include an interface 166 configured to connect to a high-voltage battery side, may include an interface 167 configured to connect to a low-voltage battery side, and may include a power supply interface configured to connect to a load side. For example, the power supply subsystem 200 may include conventional loads 191 to 19p (where p is a positive integer). The power supply apparatus 160 may be separately connected to the conventional loads 191 to 19p through conventional load power supply interfaces 1691 to 169p. For another example, the power supply apparatus 160 may include safety load power supply interfaces 1681 to 168n, and the safety load power supply interfaces 1681 to 168n are respectively connected to safety loads 171_2 to 17n_2, to supply power to the safety loads 171 to 17n. For another example, a power supply interface of the power supply apparatus 140 or 160 may be understood as a safety load power supply interface when being connected to a safety load, and may be understood as a conventional load power supply interface when being connected to a conventional load.

In some possible implementations, in the power supply subsystems 100 and 200, the power supply apparatuses 140 and 160 may include an idle power supply interface that is not connected to a load. When a new power-consuming device is added to the power supply system, power may be supplied to the new power-consuming device through the idle power supply interface.

For example, the power supply apparatus 160 includes a circuit 1610, an isolation unit 161, and an isolation unit 162. The isolation unit 161 is disposed between the circuit 1612 and the interface 166, and may be configured to control connection and disconnection between the circuit 1610 and the DC/DC circuit. The isolation unit 162 is disposed between the circuit 1612 and the interface 167, and may be configured to control connection and disconnection between the circuit 1610 and the low-voltage battery 132. The isolation units 161 and 162 may be bidirectional isolation units.

In some possible implementations, an overcurrent protection threshold of the isolation unit 161 is less than an overcurrent protection threshold of the isolation unit 162.

For example, the power supply apparatus 160 may further include a circuit configured to supply power to the load, for example, circuits 1611 to 161n and circuits 1621 to 162p. The circuit may be configured to connect the circuit 1610 to a corresponding power supply interface of the load. An isolation unit like an isolation unit 1631 or an isolation unit 1641 may be disposed to control connection and disconnection between the circuit 1610 and the load.

For example, the power supply apparatus 160 may include a control module 165, and the control module 165 may control actions between a plurality of isolation units in the power supply apparatus 160.

It should be understood that components in FIG. 4 that have the same or similar functions as those in FIG. 2 use the same reference numerals as those in FIG. 2. For specific functions, refer to the foregoing descriptions. Components using different reference numerals or names may also have the same or similar functions.

In an embodiment, the low-voltage battery 132 and the low-voltage battery 131 are two different low-voltage batteries, but types of the two batteries may be the same or similar, for example, both are lead-acid batteries or lithium batteries. In some possible implementations, types of the two batteries may be different.

In another embodiment, although the loads in the power supply subsystems 100 and 200 are different, for the power supply apparatus 140 and the power supply apparatus 160, the circuit 1410 and the circuit 1610 may be configured to charge a corresponding low-voltage battery by the high-power battery. The circuit 1410 and the circuit 1610 have the same or similar functions, or play similar roles in the power supply subsystems 100 and 200. The isolation units 141 and 161 may be respectively configured to control connection and disconnection between the DC/DC circuit and the circuits 1410 and 1610, and the isolation units 142 and 162 may be respectively configured to control connection and disconnection between the circuits 1410 and 1610 and the corresponding low-voltage batteries 131 and 132. The circuit 1411 and the circuit 1611 are respectively configured to connect a load to the circuit 1410 and the circuit 1610. The isolation unit 1431 and the isolation unit 1631 are respectively configured to control connection and disconnection between the circuits 1410 and 1610 and the corresponding loads.

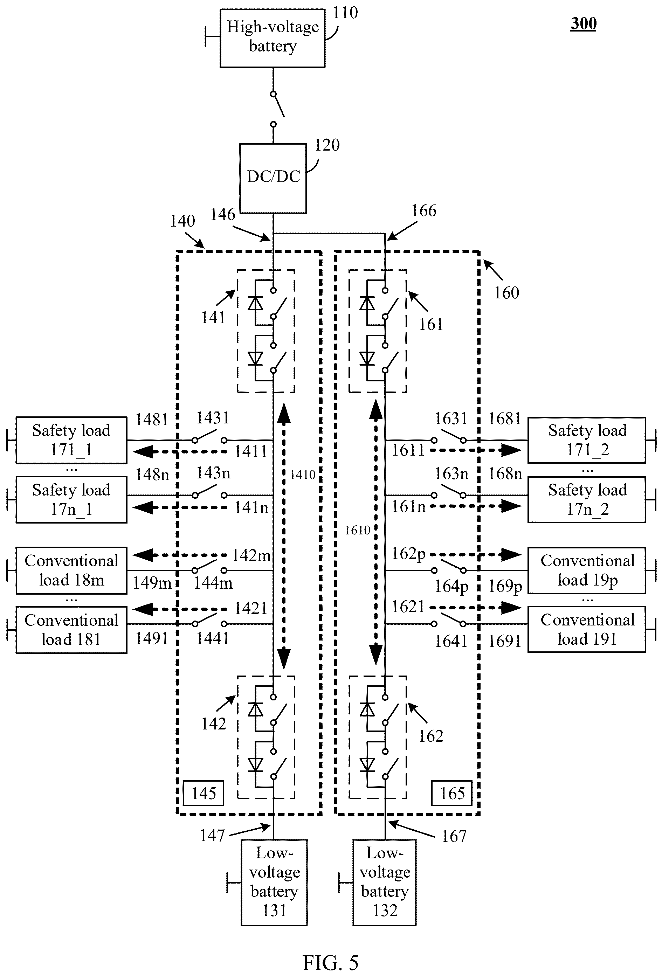

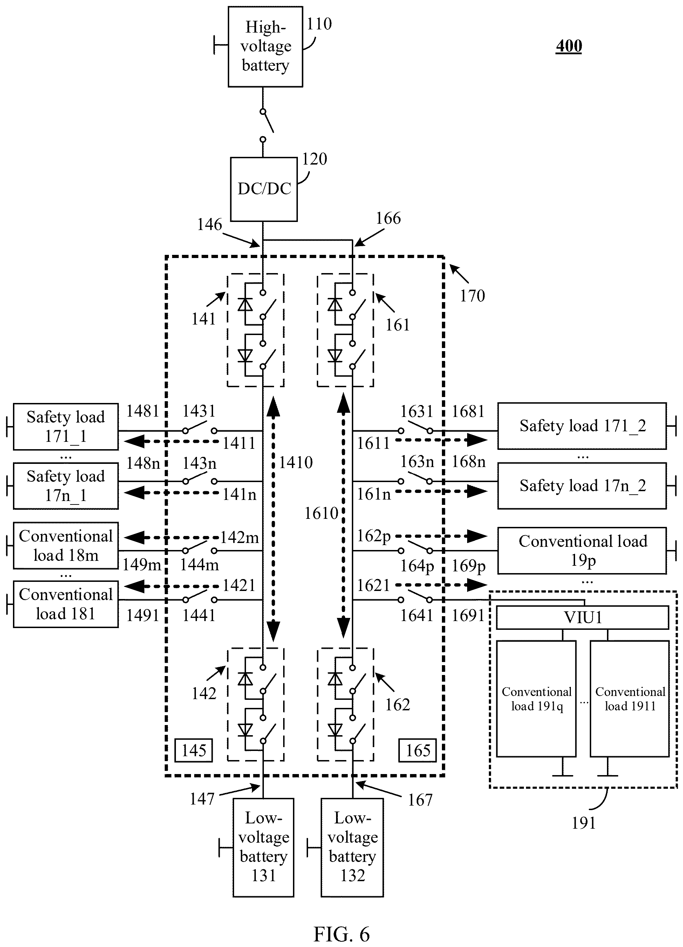

The power supply system provided in embodiments of this application is described below in detail with reference to FIG. 5 and FIG. 6.

For example, FIG. 5 is a diagram of a power supply system according to an embodiment of this application. A power supply system 300 shown in FIG. 4 may include a first power supply subsystem and a second power supply subsystem. The first power supply subsystem may include the high-voltage battery 110, the DC/DC circuit 120, the power supply apparatus 140, and the low-voltage battery 131. The second power supply subsystem may include the high-voltage battery 110, the DC/DC circuit 120, the power supply apparatus 160, and the low-voltage battery 132. The first power supply subsystem in FIG. 5 may be understood as an extension or a variation of the power supply subsystem 100 shown in FIG. 2, and the second power supply subsystem in FIG. 5 may be understood as an extension or a variation of the power supply subsystem 200 shown in FIG. 4. It should be understood that components in FIG. 5 that have the same functions as those in FIG. 2 and FIG. 4 use the same reference numerals as those in FIG. 2 and FIG. 4. For specific functions of the components, refer to the foregoing descriptions.

In an embodiment, as described above, the safety loads 17n_1 and 17n_2 may be understood as two power supply interfaces of the safety load 17n, and the power supply system 300 may include one or more safety loads, for example, the safety loads 171 to 17n. Two power supplies of a safety load may be respectively provided by the first power supply subsystem and the second power supply subsystem.

In another embodiment, the power supply system 300 may include one or more conventional loads, and the conventional loads may be powered by the first power supply subsystem or the second power supply subsystem. For example, the power supply system may include the conventional loads 181 to 18m powered through the circuit 1410, and/or the conventional loads 191 to 19p powered through the circuit 1610.

In some possible implementations, the control module 145 and the control module 165 may communicate with each other through an internal circuit of a vehicle. For example, IDU1 and IDU2 may communicate with each other through the internal circuit of the vehicle.

In some possible implementations, one power supply apparatus may be used to supply power to the load in the power supply system. For example, FIG. 6 is a diagram of another power supply system according to an embodiment of this application. Compared with the power supply system 300, a power supply system 400 shown in FIG. 6 includes only a power supply apparatus 170.

As shown in FIG. 6, the power supply apparatus 170 may include the circuit 1410, the isolation units 141 and 142, and the circuits 1411 to 141n and/or the circuits 1421 to 142m. The power supply apparatus 170 may further include the circuit 1610, the isolation units 161 and 162, and the circuits 1611 to 161n and/or the circuits 1621 to 162p. The power supply apparatus 170 may further include the control modules 145 and 165. In an embodiment, the control modules 145 and 165 may be designed in a heterogeneous manner, to prevent a common cause failure. In other words, the power supply apparatus 170 may be understood as a combination of the power supply apparatus 140 and the power supply apparatus 160.

Similar to the power supply system 300, in the power supply system 400, the isolation unit 141 may be connected to the DC/DC circuit through the interface 146, the isolation unit 161 may be connected to the DC/DC circuit through the interface 166, the isolation unit 142 may be connected to the low-voltage battery 131 through the interface 147, and the isolation unit 162 may be connected to the low-voltage battery 132 through the interface 167.

The power supply system 400 may include a first power supply subsystem and a second power supply subsystem. For example, the first power supply subsystem may include the high-voltage battery 110, the DC/DC circuit 120, the isolation unit 141, the circuit 1410, the isolation unit 142, and the circuits 1411 to 141n and/or the circuits 1421 to 142m. For another example, the second power supply subsystem may include the high-voltage battery 110, the DC/DC circuit 120, the isolation unit 161, the circuit 1610, the isolation unit 162, and the circuits 1611 to 161n and/or the circuits 1621 to 162p.

For example, a load connected to any one of the power supply interfaces of the power supply apparatuses 140, 160, and 170 may be a single load, or may be a group of loads including one or more loads.

In an embodiment, the conventional load 191 is used as an example. As shown in FIG. 6, the conventional load 191 may be a group of loads, including the conventional loads 1911 to 191q (where q is a positive integer). The group of loads may distribute power to the conventional loads 1911 to 191q through a control unit like a vehicle interface unit (vehicle interface unit, VIU). In this scenario, the power supply apparatus 170 may be understood as a level-1 power distribution apparatus, and the VIU may be understood as a level-2 power distribution apparatus. In other words, the loads may be powered in a multi-level power distribution manner.

The foregoing describes connection manners of components in the power supply system with reference to FIG. 2 to FIG. 6. The following briefly describes an operating manner of the power supply system by using the power supply system 300 as an example.

It is assumed that in the power supply system 300, a default state of each of the isolation units 141 and 161 that are configured to control connection and disconnection between the bus and the DC/DC circuit is a connected state, a default state of each of the isolation units 142 and 162 that are configured to control connection and disconnection between the bus and the low-voltage batteries is a connected state, and a default state of each of the isolation units 1431 to 143n, 1441 to 144m, 1631 to 163n, and 1641 to 164p that are configured to control connection and disconnection between the bus and the loads are a disconnected state.

Scenario 1: Operating manner of the power supply system in a normal power consumption scenario.

In a normal power supply scenario, when a load in a started or operating state is powered, an isolation unit corresponding to the load may be controlled to be in the connected state, and when the load does not need to be powered, the isolation unit corresponding to the load is in the disconnected state. Other isolation units may be in the default state. For example, the safety load 17n is used as an example, and when the safety load 17n is in an operating state, the isolation units 143n and 163n corresponding to the load may be controlled to be in the connected state, so that two power supplies may be provided for the load by using the circuit 1410 and the circuit 1610. For another example, the conventional load 19p is used as an example. When the conventional load 19p is powered, the isolation unit 164p is in the connected state, and when the conventional load 19p does not need to be powered, the isolation unit 164p is in the disconnected state.

Scenario 2: Redundancy operating solution of the power supply system when an undervoltage or a short circuit occurs in the DC/DC circuit.

For example, that the undervoltage occurs in the DC/DC circuit may mean that a voltage of an output end (an end connected to the interfaces 146 and 166) of the DC/DC circuit is less than or equal to a preset undervoltage threshold (for example, 8 V or 9 V). The undervoltage of the DC/DC circuit may cause safety loads such as the autonomous driving domain controller and the VCU to restart, affecting driving safety.

When the undervoltage or the short circuit occurs in the DC/DC circuit, the isolation units 141 and 161 may be controlled to be disconnected, and the isolation units 142 and 162 are controlled to be in a connected state.

For the first power supply subsystem, the isolation unit 141 is disconnected and the isolation unit 142 is connected, and the low-voltage battery 131 ensures, by using the circuit 1410, normal power supply to the loads 17n_1, 18m, and the like.

For the second power supply subsystem, the isolation unit 161 is disconnected and the isolation unit 162 is connected, and the low-voltage battery 132 ensures, by using the circuit 1610, normal power supply to the loads 17n_2, 19p, and the like.

In an embodiment, when functional safety of the isolation units 141 and 142 meets an ASIL B level, and when the undervoltage or the short circuit occurs in the DC/DC circuit, a functional safety level of the first power supply subsystem may reach the ASIL B level. When functional safety of the isolation units 161 and 162 meets the ASIL B level, and when the undervoltage or the short circuit occurs in the DC/DC circuit, a functional safety level of the second power supply subsystem may reach the ASIL B level. Therefore, when the undervoltage or the short circuit occurs in the DC/DC circuit, an overall functional safety level of the power supply system 300 may reach an ASIL D level.

Scenario 3: Redundancy operating solution of the power supply system when an overvoltage occurs in the DC/DC circuit.

For example, that the overvoltage occurs in the DC/DC circuit may mean that an output end of the DC/DC circuit is greater than or equal to a preset overvoltage threshold (for example, 14 V or 15 V). The overvoltage of the DC/DC circuit affects a bus voltage, and when the safety load operates in overvoltage scenarios, a service life may be shortened, unexpected errors may be reported, and the like.

When the overvoltage occurs in the DC/DC circuit, the isolation units 141 and 161 may be controlled to be disconnected, and the isolation units 142 and 162 are controlled to be in a connected state.

For the first power supply subsystem, the isolation unit 141 is disconnected and the isolation unit 142 is connected, and the low-voltage battery 131 ensures normal power supply to the loads 17n_1, 18m, and the like. Similarly, for the second power supply subsystem, the low-voltage battery 132 ensures normal power supply to the loads 17n_2, 19p, and the like.

When functional safety of the isolation units 141 and 142 meets an ASIL B level, and when the overvoltage occurs in the DC/DC circuit, a functional safety level of the first power supply subsystem may reach the ASIL B level. When functional safety of the isolation units 161 and 162 meets the ASIL B level, and when the overvoltage occurs in the DC/DC circuit, a functional safety level of the second power supply subsystem may reach the ASIL B level. Therefore, when the overvoltage occurs in the DC/DC circuit, an overall functional safety level of the power supply system 300 may reach an ASIL D level.

Scenario 4: Redundancy operating solution of the power supply system when the low-voltage batteries (131 and 132) are short-circuited.

When the low-voltage battery 131 is short-circuited, the isolation unit 142 may be controlled to be disconnected, and the units 141, 161, and 162 may be controlled to be in the default state.

When the low-voltage battery 132 is short-circuited, the isolation unit 162 may be controlled to be disconnected, and the units 141, 142, and 161 may be controlled to be in the default state.

For example, the low-voltage battery 131 is short-circuited. For the first power supply subsystem, the isolation unit 142 is disconnected, the isolation unit 141 is connected, and the high-voltage battery 110 ensures, by using the DC/DC circuit, normal power supply to the loads 17n_1, 18m, and the like. The second power supply subsystem can operate normally.

When functional safety of the isolation units 141 and 142 meets an ASIL B level, and when the low-voltage battery 131 is short-circuited, a functional safety level of the first power supply subsystem may reach the ASIL B level. When functional safety of the isolation units 161 and 162 meets the ASIL B level, and when the low-voltage battery 132 is short-circuited, a functional safety level of the second power supply subsystem may reach the ASIL B level. Therefore, when the low-voltage batteries (131, 132) are short-circuited, an overall functional safety level of the power supply system 300 may reach an ASIL D level.

Scenario 5: Operating solution of the power supply system when the low-voltage batteries are charged.

In an embodiment, when the low-voltage batteries 131 and 132 are charged at the same time, the isolation units 141, 142, 161, and 162 may be controlled to be in the connected state.

In another embodiment, when only the low-voltage battery 131 is charged, the isolation unit 162 may be controlled to be disconnected, and the isolation units 141, 142, and 161 are controlled to be in the connected state.

In another embodiment, when only the low-voltage battery 132 is charged, the isolation unit 142 may be controlled to be disconnected, and the isolation units 141, 161, and 162 are controlled to be in the connected state.

In an actual application scenario, when the low-voltage batteries (131, 132) are charged, charging voltages required by the low-voltage batteries (131, 132) may change.

In an embodiment, the charging voltage required by the low-voltage battery 131 is less than the charging voltage required by the low-voltage battery 132. In this case, only the low-voltage battery 131 may be charged, the isolation unit 162 may be controlled to be disconnected, and the isolation units 141, 142, and 161 are controlled to be in the connected state. The DC/DC circuit may charge the low-voltage battery 131 by using the circuit 1410, and supply power to a load corresponding to the circuit 1410. Because the isolation unit 161 is in the connected state, although the DC/DC circuit cannot charge the low-voltage battery 132 because the isolation unit 162 is disconnected, the DC/DC circuit can supply power to the load 191 and the like by using the circuit 1610. Further, in a continuous charging process, when the charging voltage required by the low-voltage battery 131 is the same as the charging voltage required by the low-voltage battery 132, the isolation unit 162 may be controlled to be connected, so that the DC/DC circuit can charge the low-voltage batteries 131 and 132 at the same time.

In another embodiment, the power supply system 300 may control state of charge balance between the low-voltage battery 131 and the low-voltage battery 132. For example, when a remaining state of charge of the low-voltage battery 131 is less than that of the low-voltage battery 132, and a difference between the remaining state of charge of the low-voltage battery 131 and the remaining state of charge of the low-voltage battery 132 is greater than or equal to a preset threshold, the isolation unit 162 may be controlled to be disconnected, so that only the low-voltage battery 131 can be powered. For another example, when the difference between the remaining state of charge of the low-voltage battery 131 and the remaining state of charge of the low-voltage battery 132 is 10%, 15%, or another preset proportion of a total battery capacity of the low-voltage battery 131, it may be considered that the difference between the remaining state of charge of the low-voltage battery 131 and the remaining state of charge of the low-voltage battery 132 is greater than or equal to the preset threshold. For another example, when the difference between the remaining state of charge of the low-voltage battery 131 and the remaining state of charge of the low-voltage battery 132 is greater than or equal to 1.5 ampere-hours, 2 ampere-hours, or another preset value, it may be considered that the difference between the remaining state of charge of the low-voltage battery 131 and the remaining state of charge of the low-voltage battery 132 is greater than or equal to the preset threshold.

In another embodiment, the control modules 145 and 165 may obtain the remaining states of charge of the low-voltage batteries 131 and 132, and when receiving a charging indication, may determine to charge only the low-voltage battery 131 or 132, or charge the batteries 131 and 132 at the same time. The control modules 145 and 165 may communicate with each other through an internal circuit of a vehicle, to ensure that at most one of the isolation units 141, 142, 161, and 162 is in the disconnected state when the low-voltage battery is charged.

In embodiments of this application, a plurality of charging manners may be implemented by adjusting the connected/disconnected state of the isolation units 141, 142, 161, and 162, and functions of charging control and management on the low-voltage battery 131 and/or the low-voltage battery 132 may be implemented.

Scenario 6: Redundancy operating solution of the power supply system when a short circuit occurs on the load side.

When a circuit branch in which a load is located is short-circuited, an isolation unit corresponding to the branch is controlled to be disconnected.

For example, when the conventional load 181 is short-circuited, the isolation unit 1441 may be controlled to be disconnected. For another example, when the conventional load 191 is short-circuited, the isolation unit 1641 is controlled to be disconnected. For another example, when the safety load 171_1 is short-circuited, the isolation unit 1431 is controlled to be disconnected. If the safety load 171_2 is normal, the isolation unit 1631 may be controlled to be in the connected state, so that one power supply to the safety load 171 can be ensured, and a function failure of the safety load 171 can be avoided.

Because the safety load in the power supply system may be restarted due to the drop of the bus voltage, in embodiments of this application, when a circuit branch in which some loads are located is short-circuited, an isolation unit corresponding to the faulty branch in the power supply apparatus may be controlled to be disconnected, so that the faulty branch is isolated from the bus (the circuit 1410 and the circuit 1460), to avoid that the faulty branch affects a current and a voltage of the bus. This can ensure normal power supply to another load and normal running of the safety load.

It should be noted that, in embodiments of this application, the high-voltage battery side, the low-voltage battery side, and the load side are relative to the power supply apparatuses (140, 160, and 170). The high-voltage battery side may be a part, in a loop, located before interfaces (the interface 146 and the interface 166) between the power supply apparatus and the DC/DC circuit, for example, the high-voltage battery, the DC/DC circuit, and a circuit between the high-voltage battery and the DC/DC. The low-voltage battery side may be a part, in the loop, located after interfaces (the interface 147 and the interface 167) between the power supply apparatus and the low-voltage battery side, for example, the low-voltage batteries 131 and 132. The load side may be a part, in the loop, located after interfaces (for example, the interface 1431 and the interface 1641) between the power supply apparatus and the loads, for example, the loads 171_1 and the load 191.

In embodiments of this application, components with functional safety levels of ASIL B are used as the isolation units 141, 142, 161, and 162. Through cooperation between the isolation units 141, 142, 161, and 162, the functional safety of the first and second power supply subsystems can reach the ASIL B level, and the overall functional safety of the power supply system can reach the ASIL D level. In addition, because the functional safety levels of the components used in the power supply apparatus are low, costs of the power supply apparatus can be reduced.

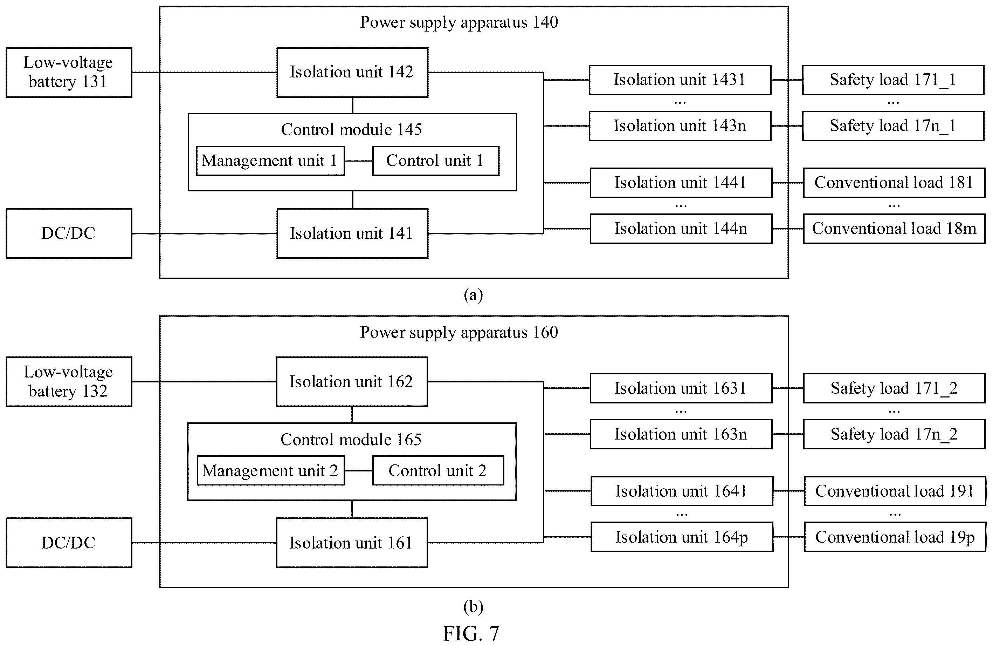

The following briefly describes the power supply apparatuses 140 and 160 with reference to FIG. 7 by using the power supply system 300 shown in FIG. 5 as an example.

For example, FIG. 7 is a schematic block diagram of a power supply apparatus according to an embodiment of this application. As shown in FIG. 7, (a) and (b) in FIG. 7 respectively show diagrams of structures of the power supply apparatus 140 and the power supply apparatus 160.

For example, the power supply apparatus 140 may include the control module 145, and the power supply apparatus 160 may include the control module 165. The control module 145 may include a control unit 1, and may further include a management unit 1. The control module 165 may include a control unit 2, and may further include a management unit 2.

For example, the control module may be configured to: obtain a voltage output by a power source (a DC/DC circuit and a low-voltage battery), and when the voltage is less than or equal to a preset value, control a corresponding isolation unit to be disconnected.

In an embodiment, the control unit 1 is used as an example, and the control unit 1 may obtain a voltage at an output end of the DC/DC circuit (in other words, detecting a voltage of the interface 146). For example, when an undervoltage occurs in the DC/DC circuit, the isolation unit 141 is controlled to be disconnected. For another example, when an overvoltage occurs in the DC/DC circuit, the isolation unit 141 is controlled to be disconnected. In this way, a fault or an exception of the DC/DC circuit may be prevented from affecting a voltage of the circuit 1410.

In another embodiment, the control unit 1 may detect a voltage at an output end of the low-voltage battery 131 (in other words, detecting a voltage of the interface 147), and when a value of the voltage is less than or equal to a preset threshold (for example, 9.5 V or 9.2 V), the isolation unit 142 is controlled to be disconnected.

In another embodiment, when an undervoltage or a short circuit occurs in the DC/DC circuit, the control unit 2 may control the isolation unit 161 to be disconnected. When a short circuit occurs in the low-voltage battery 132, the control unit 2 may control the isolation unit 162 to be disconnected.

In embodiments of this application, the isolation units 141, 142, 161, and 162 are bidirectional isolation units. By controlling a corresponding isolation unit to be disconnected, the DC/DC circuit or the low-voltage battery can be completely disconnected from the bus, to ensure normal power supply to the load.

In another embodiment, the control unit 1 is used as an example, and when a branch in which a load (for example, the conventional load 181) is located is short-circuited, an isolation unit (for example, the isolation unit 1441) corresponding to the branch is controlled to be disconnected. Therefore, an overcurrent fault caused by the short circuit can be avoided, a bus voltage drop caused by the short circuit can be avoided, and normal power supply to another load can be ensured.

For example, the management unit may be configured to obtain a running state of the control module, and when the control module runs abnormally, may control an isolation unit on a high-voltage battery side of the power supply apparatus to be disconnected.

For example, the management unit may supply power to the control module. The management unit may detect a voltage output by the management unit. When it is detected that the voltage output by the management unit is abnormal, the isolation unit on the high-voltage battery side of the power supply apparatus may be disconnected, and an isolation unit on a low-voltage battery side is maintained in a connected state.

The following uses the control unit 1 and the management unit 1 as an example for description.

In an embodiment, the management unit 1 may supply power to the control unit 1. The management unit 1 may obtain a voltage at an output end of the management unit 1, and when the output voltage exceeds a preset range, control the power supply apparatus 140 to enter a safe mode. For example, the preset range may be (4.9, 5.2), [4.8, 5.2], or another range. In the safe mode, the isolation unit 141 on the high-voltage battery side of the power supply apparatus 140 is in a disconnected state, and the isolation unit 142 on the low-voltage battery side is in the connected state. For the first power supply subsystem, the low-voltage battery 131 supplies power to the load in the power supply subsystem.

In another embodiment, the management unit 1 may obtain a running state of the control unit 1, and when the control unit 1 runs abnormally, the management unit 1 may control the power supply apparatus 140 to be in the safe mode.

In another embodiment, the management unit 1 may configure a watchdog for the control unit 1, and when the control unit 1 encounters a running exception (for example, a running program fleet occurs in the control unit, program running at an unexpected time, or a program does not run according to a preset sequence), the management unit 1 controls the control unit 1 to be reset, so that the control module 145 is in the safe mode.

In some possible implementations, the management unit 1 may include a safety pin, and when it is detected that the control unit 1 operates abnormally, the control module 145 is in the safe mode via the safety pin.

For example, the management unit may store safety data, for example, a preset threshold used to determine whether an undervoltage or overvoltage occurs at a power supply output end, or a preset threshold used to determine whether an output voltage of the management unit is normal. When it is detected that the safety data is illegally modified, the power supply apparatus is controlled to be in the safe mode, and the low-voltage battery is used to supply power to a corresponding load of a power supply subsystem.

For example, each of the management unit 1 and the management unit 2 may be a system basis chip (system basis chip, SBC), and each of the control unit 1 and the control unit 2 may be a microcontroller unit (microcontroller unit, MCU). For example, the control module 145 may include an SBC1 and an MCU1, and the control module 165 may include an SBC2 and an MCU2.

In an embodiment, functional safety levels of the MCU1 and the MCU2 are ASIL B, and the MCU1 and the MCU2 are designed in a heterogeneous manner, to prevent a common cause failure from occurring on the MCU1 and the MCU2.

In another embodiment, functional safety levels of the SBC1 and the SBC2 are ASIL B, and the SBC1 and the SBC2 are designed in a heterogeneous manner, to prevent a common cause failure from occurring on the SBC1 and the SBC2.

When functional safety of the MCU1, the MCU2, the SBC1, and the SBC2 can all meet an ASIL B requirement, an overall functional safety level of the control unit of the power supply system 300 can reach an ASIL D level.

In some possible implementations, the MCU1 and the MCU2 may be products of different manufacturers, and the SBC1 and the SBC2 may be products of different manufacturers.

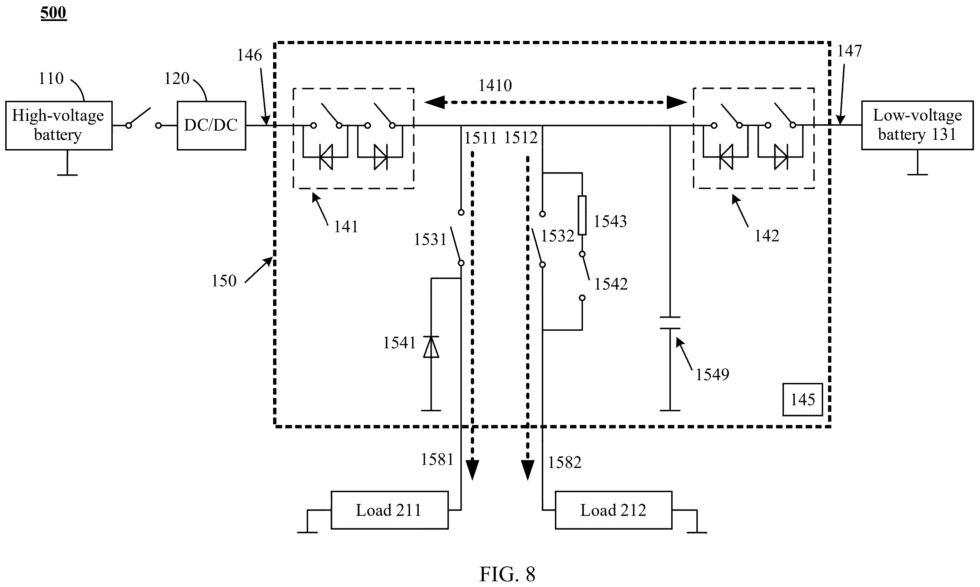

For example, FIG. 8 is a diagram of a structure of another power supply subsystem according to an embodiment of this application. A power supply subsystem 500 may supply power to a load 211 and a load 212 by using a power supply apparatus 150. The load 211 may be connected to a circuit 1511 through a power supply interface 1581. The load 212 may be connected to a circuit 1512 through a power supply interface 1582. The power supply subsystem 500 may be understood as an extension of the power supply subsystem 100 or 200. The power supply apparatus 150 may be understood as an extension of the power supply apparatus 140 or 160. The load 211 and/or the load 212 may be a safety load or a conventional load.

In an embodiment, the power supply subsystem 500 may include a capacitor 1549, and the capacitor 1549 may be determined based on a length and a diameter of a harness of the power supply subsystem. For example, in a case of a transient high current during capacitive load startup, a short circuit between an output end and the ground, or a short circuit between a power source and the ground in a power supply system, an inductor in the power supply system delays a change rate of a current in a loop, thereby affecting power supply timeliness of the power source. A capacitance value of the capacitor 1549 may be determined based on a length and a diameter of a power cable in the power supply subsystem 500, so that the capacitor 1549 can compensate for an impact of the inductor on the change rate of the power supply current in the power supply loop, and then the power supply apparatus or the power supply system can still ensure a safe voltage range in an extreme current condition. For another example, in the power supply subsystem, the low-voltage battery 131 is connected to an interface 147 through a cable bundle with a length of 7 meters and a cross-sectional area of 35 square millimeters, and it may be determined, based on the length and the cross-sectional area of the cable bundle, that the capacitance value of the capacitor 1549 is 2.2*10⁻⁴ farads (farad, F). The foregoing description of the capacitor 1549 is merely an example. In a specific implementation process, the capacitance value of the capacitor may be another value. This is not limited in embodiments of this application.

In another embodiment, the load 211 may be an inductive load, and the power supply apparatus 150 may include a freewheeling diode 1541. By disposing the freewheeling diode 1541, a freewheeling function can be implemented on the inductive load or the inductor in a conducting wire, to prevent the load 211 from being damaged due to unexpected overvoltage.

In another embodiment, the load 212 may be a capacitive load. The power supply circuit 1512 of the load may be connected in parallel to a pre-charging circuit. A pre-charging switch 1542 and a pre-charging resistor 1543 may be disposed in the pre-charging circuit. The control module 145 may control on and off of the pre-charging switch 1542. When power needs to be supplied to the load 212, the pre-charging switch 1542 may be first controlled to be turned on, and then the isolation unit 1532 is controlled to be connected. By disposing the pre-charging circuit, an impulse current at a moment of conduction can be reduced, and a problem of false protection caused by a switch can be avoided. The control module 145 may control on and off of the pre-charging switch 1542.

In another embodiment, a static circuit wake-up threshold is set, so that the entire vehicle can be woken up when a static current of the entire vehicle is excessively high, and an isolation unit corresponding to an abnormal load is controlled to be disconnected, thereby avoiding damage caused by a low-voltage battery loss. For example, the load 211 may be a central control panel, and the control module 145 of the power supply apparatus 150 may monitor a current in a power supply loop. In a sleep process of the central control panel, when an operating current in a branch 1511 is greater than or equal to a wake-up threshold (for example, 100 mA), the control module 145 may control the isolation unit 1531 to be disconnected. For another example, a wake-up threshold corresponding to each load may be determined based on an operating characteristic of each load in the power supply system.

The low-voltage battery (for example, the low-voltage battery 130, 131, or 132) in this application may be a 12 V battery, a 24 V battery, a 36 V battery, or a 48 V battery. A specific form of the low-voltage battery is not limited in embodiments of this application.

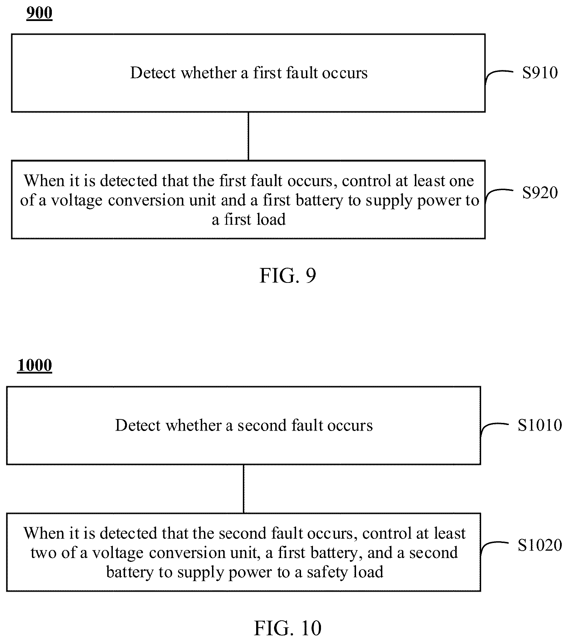

For example, FIG. 9 is a schematic flowchart of a power supply method according to an embodiment of this application. The method may be performed by the power supply apparatus, or may be performed by a processor or a chip in A power supply apparatus, or may be performed by a power supply system or a vehicle.

S910: Detect whether a first fault occurs.

S920: When a first fault is detected, control at least one of a voltage conversion unit and a first battery to supply power to a first load.

Optionally, the first fault may include at least one of the following: An output of the voltage conversion unit is greater than or equal to a first threshold, the output of the voltage conversion unit is less than or equal to a second threshold, and the voltage conversion unit is short-circuited; and controlling at least one of the voltage conversion unit and the first battery to supply power to the first load may include: controlling a first isolation unit to be disconnected, controlling a second isolation unit to be connected, and supplying power to the first load through the first battery.

Optionally, the first fault may include at least one of the following: An output of the first battery is less than or equal to a third threshold, and the first battery is short-circuited; and controlling at least one of the voltage conversion unit and the first battery to supply power to the first load may include: controlling the second isolation unit to be disconnected, controlling the first isolation unit to be connected, and supplying power to the first load through the voltage conversion unit.

For example, FIG. 10 is a schematic flowchart of a power supply method according to an embodiment of this application. The method may be performed by the power supply system in the foregoing embodiments, or may be performed by the power supply apparatus in the foregoing embodiments, or may be performed by a control unit, a processor, or a chip in the power supply system. A method 1000 may include the following steps.

S1010: Detect whether a second fault occurs.

For example, a power supply system may include the power supply system 300 in the foregoing embodiments, a first battery and a second battery may include the low-voltage batteries (for example, the low-voltage batteries 131 and 132 respectively) in the foregoing embodiments, a voltage conversion unit may include the voltage conversion unit (for example, the DC/DC circuit) in the foregoing embodiments, and a first load may include the safety loads (for example, the safety loads 171 and 17n) in the foregoing embodiments.

S1020: When it is detected that the second fault occurs, control at least two of the voltage conversion unit, the first battery, and the second battery to supply power to the safety load.

For example, the second fault includes but is not limited to: an output exception of the voltage conversion unit, an output exception of the first battery, and/or an output exception of the second battery.

The output exception of the voltage conversion unit includes but is not limited to an output overvoltage of the voltage conversion unit, an output undervoltage of the voltage conversion unit, and a short circuit of the voltage conversion unit.

An output exception of a battery includes but is not limited to an output undervoltage of the battery and a short circuit of the first battery.

For example, for a specific method for controlling, when it is detected that the second fault occurs, at least two of the voltage conversion unit, the first battery, and the second battery to supply power to the first load, refer to the descriptions of corresponding parts in the embodiments in FIG. 5 to FIG. 7. Details are not described herein again.

Optionally, the second fault includes: An output of the voltage conversion unit is greater than or equal to a first threshold, an output of the voltage conversion unit is less than or equal to a second threshold, or the voltage conversion unit is short-circuited; and controlling at least two of the voltage conversion unit, the first battery, and the second battery to supply power to the first load includes: controlling a first isolation unit and a sixth isolation unit to be disconnected, controlling a second isolation unit and a seventh isolation unit to be connected, and supplying power to the first load through the first battery and the second battery.

Optionally, the second fault includes: An output of the first battery is less than or equal to a third threshold or the first battery is short-circuited; and controlling at least two of the voltage conversion unit, the first battery, and the second battery to supply power to the first load include: controlling a second isolation unit to be disconnected, controlling the first isolation unit, the sixth isolation unit, and the seventh isolation unit to be connected, and supplying power to the first load through the voltage conversion unit and the second battery.

Optionally, the method may further include: obtaining battery state information of the first battery and the second battery; and controlling state of charge balance between the first battery and the second battery based on the battery state information.

Optionally, controlling state of charge balance between the first battery and the second battery includes: when a state of charge difference between the first battery and the second battery is greater than or equal to a fourth threshold, controlling the seventh isolation unit to be disconnected, and controlling the first isolation unit, the second isolation unit, and the sixth isolation unit to be connected.

In an embodiment, the power supply system 300 is used as an example, the MCU1 of the power supply apparatus 140 and the MCU2 of the power supply apparatus 160 may obtain remaining states of charge of the low-voltage batteries 131 and 132. When receiving a charging indication, the MCU1 and the MCU2 may determine to charge only one low-voltage battery or charge two low-voltage batteries. The MCU1 and the MCU2 may communicate with each other through an internal circuit of a vehicle, so that at most one of the isolation units 141, 142, 161, and 162 is disconnected when the low-voltage battery is charged.

An embodiment of this application further provides a vehicle. The vehicle includes the foregoing power supply apparatus or the foregoing power supply system.

An embodiment of this application further provides a computer program product. The computer program product includes computer program code. When the computer program code is run on a computer, the computer is enabled to implement the method in embodiments of this application.

An embodiment of this application further provides a computer-readable storage medium. The computer-readable medium stores computer instructions. When the computer instructions are run on a computer, the computer is enabled to implement the method in embodiments of this application.

An embodiment of this application further provides a chip, including a circuit configured to perform the method in embodiments of this application.

A person of ordinary skill in the art may be aware that units and algorithm steps in the examples described based on embodiments disclosed in this specification can be implemented by electronic hardware or a combination of computer software and electronic hardware. Whether the functions are performed in a hardware or software manner depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes various media that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power supply apparatus, comprising a first circuit, a second circuit, a first isolation unit, and a second isolation unit, wherein
a first end of the first isolation unit is electrically connected to the first circuit, a second end of the first isolation unit is configured to connect to a first output end of a voltage conversion unit, and the first isolation unit is configured to control connection and disconnection between the first circuit and the first output end of the voltage conversion unit;
a first end of the second isolation unit is electrically connected to the first circuit, a second end of the second isolation unit is configured to connect to a first battery, and the second isolation unit is configured to control connection and disconnection between the first circuit and the first battery; and
the second circuit is electrically connected to the first circuit, and is configured to supply power to a first load, wherein
the first isolation unit and the second isolation unit are bidirectional isolation units, the bidirectional isolation unit comprises a first switch, a second switch, a first diode, and a second diode, the first diode is connected in parallel to the first switch, the second diode is connected in parallel to the second switch, the first switch is connected in series to the second switch, and an anode of the first diode is connected to an anode of the second diode.

2. The power supply apparatus according to claim 1, wherein the apparatus further comprises:
a first control unit, configured to: obtain first state information, wherein the first state information indicates a state of the first output end of the voltage conversion unit and/or a state of an output end of the first battery; and
when the first state information indicates that the state of the first output end of the voltage conversion unit is abnormal, control the first isolation unit to be disconnected, and control the second isolation unit to be connected; or
when the first state information indicates that an output of the first battery is abnormal, control the second isolation unit to be disconnected, and control the first isolation unit to be connected.

3. The power supply apparatus according to claim 2, wherein the apparatus further comprises:
a first management unit, configured to: when the first control unit runs abnormally, control the first isolation unit to be disconnected, and control the second isolation unit to be connected.

4. The power supply apparatus according to claim 3, wherein the first load is a safety load, and the first management unit is further configured to:
when the first control unit runs abnormally, and after it is determined that power supply to the first load is normal, control the first control unit to restart.

5. The power supply apparatus according to claim 3 or 4, wherein the first management unit is further configured to:
supply power to the first control unit through a first port of the first management unit; and
obtain an output state of the first port, and when an output of the first port is abnormal, control the first isolation unit to be disconnected, and control the second isolation unit to be connected.

6. The power supply apparatus according to any one of claims 1 to 5, wherein the first load is the safety load, the safety load comprises at least a first power supply interface and a second power supply interface, and the second circuit is connected to the first power supply interface of the first load; and
the power supply apparatus further comprises a third circuit, a fourth circuit, a third isolation unit, and a fourth isolation unit, wherein
a first end of the third isolation unit is electrically connected to the third circuit, a second end of the third isolation unit is configured to connect to a second output end of the voltage conversion unit, and the third isolation unit is configured to control connection and disconnection between the third circuit and the second output end of the voltage conversion unit;
a first end of the fourth isolation unit is electrically connected to the third circuit, a second end of the fourth isolation unit is configured to connect to a second battery, the fourth isolation unit is configured to control connection and disconnection between the third circuit and the second battery, and the third isolation unit and the fourth isolation unit are the bidirectional isolation units; and
the fourth circuit is electrically connected to the third circuit, and is configured to supply power to the first load.

7. The power supply apparatus according to any one of claims 2 to 6, wherein the power supply apparatus further comprises a fifth isolation unit, the second circuit supplies power to the first load through the fifth isolation unit, and the fifth isolation unit is configured to control connection and disconnection between the second circuit and the first load; and
the first control unit is further configured to:
when the first load is short-circuited, control the fifth isolation unit to be disconnected.

8. The power supply apparatus according to claim 7, wherein the apparatus further comprises:
a second control unit, configured to: obtain second state information, wherein the second state information indicates a state of the second output end of the voltage conversion unit and/or a state of the second battery; and
when the second state information indicates that the state of the second output end of the voltage conversion unit is abnormal, control the third isolation unit to be disconnected, and control the fourth isolation unit to be connected; or
when the second state information indicates that an output of the second battery is abnormal, control the fourth isolation unit to be disconnected, and control the third isolation unit to be connected.

9. The power supply apparatus according to claim 8, wherein the apparatus further comprises:
a second management unit, configured to: when the second control unit runs abnormally, control the third isolation unit to be disconnected, and control the fourth isolation unit to be connected; and/or
when the second control unit runs abnormally, and after it is determined that power supply to the first load is normal, control the second control unit to restart.

10. The power supply apparatus according to any one of claims 1 to 9, wherein an overcurrent protection threshold of the first isolation unit is less than an overcurrent protection threshold of the second isolation unit.

11. A power supply system, comprising a first power supply unit and a first battery, wherein the first power supply unit comprises the first power supply unit and the first battery;
the first power supply unit comprises a first circuit, a second circuit, a first isolation unit, and a second isolation unit, wherein
a first end of the first isolation unit is electrically connected to the first circuit, a second end of the first isolation unit is configured to connect to a first output end of a voltage conversion unit, and the first isolation unit is configured to control connection and disconnection between the first circuit and the first output end of the voltage conversion unit;
a first end of the second isolation unit is electrically connected to the first circuit, a second end of the second isolation unit is connected to the first battery, and the second isolation unit is configured to control connection and disconnection between the first circuit and the first battery; and
the second circuit is electrically connected to the first circuit, and is configured to supply power to the first load, wherein
the first isolation unit and the second isolation unit are bidirectional isolation units, the bidirectional isolation unit comprises a first switch, a second switch, a first diode, and a second diode, the first diode is connected in parallel to the first switch, the second diode is connected in parallel to the second switch, the first switch is connected in series to the second switch, and an anode of the first diode is connected to an anode of the second diode.

12. The system according to claim 11, wherein the power supply system further comprises a second power supply unit and a second battery, wherein
the second power supply unit comprises a fifth circuit, a sixth circuit, a sixth isolation unit, and a seventh isolation unit, wherein
a first end of the sixth isolation unit is electrically connected to the fifth circuit, a second end of the sixth isolation unit is configured to connect to a second output end of the voltage conversion unit, and the sixth isolation unit is configured to control connection and disconnection between the fifth circuit and the second output end of the voltage conversion unit;
a first end of the seventh isolation unit is electrically connected to the fifth circuit, a second end of the seventh isolation unit is electrically connected to the second battery, the seventh isolation unit is configured to control connection and disconnection between the fifth circuit and the second battery, and the sixth isolation unit and the seventh isolation unit are the bidirectional isolation units; and
the sixth circuit is electrically connected to the fifth circuit, and is configured to supply power to the first load.

13. A power supply method, applied to a first power supply unit, wherein the first power supply unit comprises a first circuit, a second circuit, a first isolation unit, and a second isolation unit, wherein
a first end of the first isolation unit is electrically connected to the first circuit, a second end of the first isolation unit is configured to connect to a first output end of a voltage conversion unit, and the first isolation unit is configured to control connection and disconnection between the first circuit and the first output end of the voltage conversion unit;
a first end of the second isolation unit is electrically connected to the first circuit, a second end of the second isolation unit is configured to connect to a first battery, and the second isolation unit is configured to control connection and disconnection between the first circuit and the first battery; and
the second circuit is electrically connected to the first circuit, and is configured to supply power to a first load, wherein
the first isolation unit and the second isolation unit are bidirectional isolation units, the bidirectional isolation unit comprises a first switch, a second switch, a first diode, and a second diode, the first diode is connected in parallel to the first switch, the second diode is connected in parallel to the second switch, the first switch is connected in series to the second switch, and an anode of the first diode is connected to an anode of the second diode; and
the method comprises:
when a first fault is detected, controlling at least one of the voltage conversion unit and the first battery to supply power to the first load.

14. The method according to claim 13, wherein the first fault comprises at least one of the following: an output of the voltage conversion unit is greater than or equal to a first threshold, the output of the voltage conversion unit is less than or equal to a second threshold, and the voltage conversion unit is short-circuited; and controlling at least one of the voltage conversion unit and the first battery to supply power to the first load comprises:
controlling the first isolation unit to be disconnected, controlling the second isolation unit to be connected, and supplying power to the first load through the first battery.

15. The method according to claim 13, wherein the first fault comprises at least one of the following: an output of the first battery is less than or equal to a third threshold, and the first battery is short-circuited; and controlling at least one of the voltage conversion unit and the first battery to supply power to the first load comprises:
controlling the second isolation unit to be disconnected, controlling the first isolation unit to be connected, and supplying power to the first load through the voltage conversion unit.

16. A vehicle, comprising a high-voltage battery and a voltage conversion unit, wherein the high-voltage battery is electrically connected to an input end of the voltage conversion unit; and
the vehicle further comprises the power supply apparatus according to any one of claims 1 to 10, wherein the first isolation unit of the power supply apparatus is electrically connected to the first output end of the voltage conversion unit; or
the vehicle further comprises the power supply system according to claim 11 or 12, wherein the first isolation unit of the power supply system is electrically connected to the first output end of the voltage conversion unit.

17. A computer-readable storage medium, wherein the computer-readable storage medium stores instructions; and when the instructions are executed by a processor, the processor is caused to implement the method according to any one of claims 13 to 15.

18. A chip, wherein the chip comprises a circuit, and the circuit is configured to perform the method according to any one of claims 13 to 15.

19. A computer program product, wherein the computer program product comprises computer program code, and when the computer program code is run on a computer, the computer is caused to perform the method according to any one of claims 13 to 15.
